# EUROPEAN PATENT SPECIFICATION

(11) **EP 2 975 376 B1**
(45) Date of publication and mention of the grant of the patent: **12.08.2020**
(21) Application number: 13890865.2
(22) Date of filing: 23.08.2013
(51) Int. Cl.: G01N 30/08, G01N 1/40, B01D 15/10

(54) **SOLUTE EXTRACTION DEVICE**
VORRICHTUNG ZUR EXTRAKTION GELÖSTER STOFFE
DISPOSITIF D'EXTRACTION DE SOLUTÉ

(43) Date of publication of application: 20.01.2016
(73) Proprietor: Miura Co., Ltd., Matsuyama-shi, Ehime 799-2696 (JP)
(72) Inventor: FUJITA, Hiroyuki, Matsuyama-shi, Ehime 799-2696 (JP); NAKAMURA, Hirofumi, Matsuyama-shi, Ehime 799-2696 (JP)
(74) Representative: Elkington and Fife LLP
(86) International application number: PCT/JP2013/072513
(87) International publication number: WO 2015/025419

(56) References cited:
- EP-A1- 2 871 476
- WO-A1-2005/062016
- JP-A- 2001 330 597
- JP-A- 2002 372 522
- JP-A- 2005 172 758

## Description

### TECHNICAL FIELD

The present invention relates to an extracting apparatus, in particular, an apparatus for extracting a solute from a solution.

### BACKGROUND ART

In analysis of a solute, extraction of the solute from a solution is sometimes conducted for the purpose of separation between impurities and the solute in the solution, or for solvent displacement. For example, in analysis of dioxins which are strongly toxic environmental pollutants, usually, dioxins are selectively extracted from a solution of dioxins containing impurities, and the resultant extract is used as an analytic sample for dioxins.

Patent Literature 1 discloses an apparatus for extracting dioxins from a solution of dioxins. The apparatus includes a reservoir packed with a filter material composed of a plurality of silica layers, and an adsorption column made of glass packed with an adsorption material such as alumina or activated carbon capable of adsorbing dioxins, and has such a structure that the reservoir and the adsorption column are connected by a straight pipe having a branch portion.

When extracting dioxins by this extracting apparatus, first, a solution of dioxins is injected into the reservoir, and then hexane is supplied to the reservoir. Hexane supplied to the reservoir passes through the filter material while dissolving dioxins in the solution, and flows into the adsorption column through the straight pipe and passes through the adsorption material. In this process, impurities contained in the solution of dioxins are trapped by the filter material, and separated from dioxins. The dioxins dissolved in hexane are trapped by the adsorption material and separated from hexane.

Then, the adsorption column is supplied with a solvent for extracting dioxins, for example, toluene or dimethyl sulfoxide from the side opposite to the passing direction of hexane, and the extraction solvent having passed through the adsorption material is caused to flow into a branch portion of the straight pipe and caught. At this time, the extraction solvent is caught as a solution having extracted dioxins trapped by the adsorption material. As a result, an extract of dioxins from which impurities have been separated is obtained. The extract of dioxins thus obtained is analyzed by an analytical method such as gas chromatography mass spectrometry (GC/MS method) or a bioassay method depending on the kind of extraction solvent.

The term "dioxins" generally encompasses polychlorinated dibenzo-para-dioxins (PCDDs), polychlorinated dibenzofurans (PCDFs) and dioxin-like polychlorinated biphenyls (DL-PCBs) . Among 209 kinds of polychlorinated biphenyls (PCBs), DL-PCBs are PCBs showing toxicity similar to those of PCDDs and PCDFs, and include non-ortho PCBs and mono-ortho PCBs.

Therefore, an extract of dioxins obtained by the extracting apparatus contains these many kinds of dioxins at the same time. However, when such an extract is analyzed, the result can be unreliable. For example, it is known that when the extract is analyzed by a high-resolution GC/MS method, mono-ortho PCBs influence on quantitative analysis results of PCDDs and PCDFs, and inversely PCDDs and PCDFs influence on quantitative analysis results of mono-ortho PCBs.

Since the extracting apparatus intends to trap every kind of dioxins by the adsorption material packed in the adsorption column, some dioxins may not be recovered because of their outflow, or the recovery rate of some dioxins may be significantly decreased. In such a case, it is conceivable to select an adsorption material having higher adsorption capability for dioxins. However, such an adsorption material generally needs a large amount of solvent for extraction, and can sacrifice the recovery rate of the overall dioxins because the adsorbed dioxins are difficult to be removed.

### PRIOR ART LITERATURES

### PATENT LITERATURES

Patent Literature 1: WO2005/062016

### SUMMARY OF THE INVENTION

### PROBLEMS TO BE SOLVED BY THE INVENTION

The present invention intends to fractionate a solute or increase the recovery rate of a solute in extracting a solute from a solution.

### MEANS FOR SOLVING THE PROBLEMS

The present invention relates to an apparatus for extracting a solute from a solution. The apparatus includes a solute trapping column having an injection part equipped with an injection port for the solution at one end and a discharge port at the other end, and including multiple trapping agent layers capable of trapping the solute packed with a space interposed therebetween; a first supplying device for supplying the solute trapping column with a solvent for developing the solute within the solute trapping column; and a second supplying device for supplying the solute trapping column with a solvent for extracting the solute.

The solute trapping column has branched pathways respectively extending from the injection part and the space for flowing the extraction solvent from the second supplying device. The second supplying device is settable during its operation so that the extraction solvent flows in one of the branched pathways sequentially selected from the extraction solvent supply side, and that flowing of the extraction solvent in the other of the branched pathways and the injection port is blocked. The second supplying device is also settable during operation of the first supplying device so that flowing of the developing solvent to the branched pathways is blocked.

When extracting a solute from a solution by the extracting apparatus, the solution is injected into the solute trapping column through the injection port. If the first supplying device supplies a developing solvent to the solute trapping column into which the solution has been injected, the developing solvent sequentially passes through the trapping agent layers in the solute trapping column in turn, and is discharged through the discharge port. In this process, the solute contained in the solution is developed on the trapping agent layers while it is dissolved in the developing solvent, and trapped by the trapping agent layers. Then, if the second supplying device supplies an extraction solvent to the solute trapping column, the extraction solvent passes through the trapping agent layer situated on the side of the column to which the extraction solvent is supplied to extract the solute trapped by the trapping agent layer, and selectively flows into the branched pathway located in the space between the above trapping agent layer and the neighboring trapping agent layer. The second supplying device repeats the above operation in accordance with the number of layers in the multiple trapping agent layers, and sequentially extracts the solute trapped by each of the trapping agent layers with the extraction solvent and allows it to flow into each branched pathway.

As a result, with this extracting apparatus, a plurality of extracts resulting from individually extracting a solute from each of the trapping agent layers are obtained, so that it is possible to fractionate and extract the solute, and to improve the recovery rate of the solute.

In one embodiment of the extracting apparatus of the present invention, at least one of the multiple trapping agent layers is formed of a different trapping agent. In another embodiment of the extracting apparatus, the multiple trapping agent layers are formed of a single trapping agent.

The second supplying device of the extracting apparatus of the present invention has, for example, closable ventilation pathways respectively communicating with each of the branched pathways and having a recovery container for the extraction solvent, and controls a flow of the extraction solvent or the developing solvent for each of the branched pathways by opening or closing of the ventilation pathways. In this case, for example, each of the ventilation pathways is formed of a flexible material and has a pinch valve, in the way between the corresponding branched pathway and the recovery container.

The second supplying device is, for example, capable of supplying the solute trapping column with the extraction solvent through the discharge port.

Preferably, the extracting apparatus of the present invention further includes an air supplying device for supplying the solute trapping column with an air flow through the branched pathways.

In one embodiment of the extracting apparatus of the present invention, the solution is an aliphatic hydrocarbon solvent solution of dioxins, and the multiple trapping agent layers are capable of trapping the dioxins. In this case, the solute trapping column includes, for example, a first trapping agent layer containing activated carbon-containing silica gel and graphite-containing silica gel stacked in this order from the side of the injection part, and a second trapping agent layer containing alumina disposed on the side of the graphite-containing silica gel of the first trapping agent layer.

The extracting apparatus of this embodiment further includes, for example, a purification column packed with a purification layer for trapping impurities contained in an aliphatic hydrocarbon solvent solution of dioxins. The purification column has an introducing part for the aliphatic hydrocarbon solvent solution at one end, and communicates with the injection port of the solute trapping column at the other end. In this case, the first supplying device communicates with the introducing part so that it supplies the solute trapping column with the developing solvent through the purification column.

The purification layer of the purification column is, for example, a layered product including a silver nitrate silica gel layer and a sulfuric acid silica gel layer. The layered product preferably has the silver nitrate silica gel layer on the side of the introducing part.

Other objects and results of the present invention will be mentioned in the following detailed description.

### BRIEF DESCRIPTION OF THE DRAWINGS

[Fig. 1] A partial section view of an outline of one embodiment of a solute extracting apparatus according to the present invention.
[Fig. 2] A drawing showing one state of operation of the solute extracting apparatus.
[Fig. 3] A drawing showing another state of operation of the solute extracting apparatus.
[Fig. 4] A drawing showing still another state of operation of the solute extracting apparatus.
[Fig. 5] A drawing showing yet another state of operation of the solute extracting apparatus.
[Fig. 6] A drawing showing a further state of operation of the solute extracting apparatus.
[Fig. 7] A drawing showing a still further state of operation of the solute extracting apparatus.
[Fig. 8] A drawing showing a yet further state of operation of the solute extracting apparatus.
[Fig. 9] A drawing showing yet another state of operation of the solute extracting apparatus.
[Fig. 10] A drawing showing yet another state of operation of the solute extracting apparatus.
[Fig. 11] A drawing showing yet another state of operation of the solute extracting apparatus.

### EMBODIMENTS OF THE INVENTION

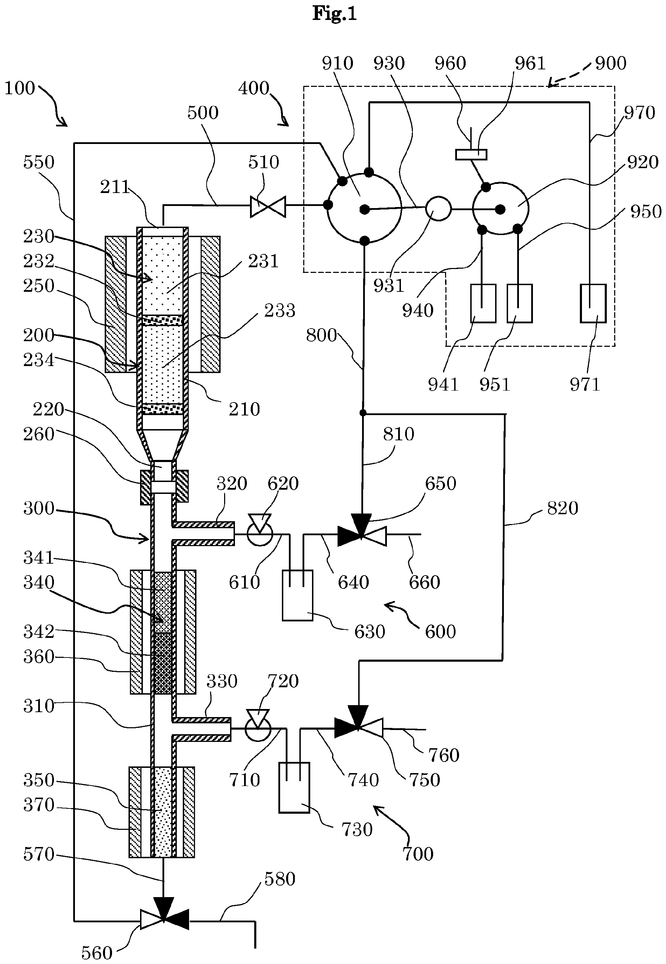

With reference to Fig. 1, one embodiment of the solute extracting apparatus according to the present invention will be described. Fig. 1 shows an outline of the solute extracting apparatus, and does not accurately reflect the structure, shape, size and the like of each part.

In Fig. 1, a solute extracting apparatus 100 is provided for extracting a solute, dioxins from a solution of dioxins for the purpose of analyzing dioxins, and mainly includes a purification column 200 and a solute trapping column 300 arranged in standing positions, and a supplying device 400.

The purification column 200 is provided for separating impurities contained with dioxins in a solution of dioxins from dioxins, and is formed of a material having at least solvent resistance, chemical resistance and heat resistance, for example, glass, a resin or a metal having these characteristics. The purification column 200 has a main body part 210 in which a purification layer 230 is packed, and a connecting part 220 extending from a lower part of the main body part 210.

The main body part 210 is formed into a substantially cylindrical shape, and has an opening at its upper end part, which serves as an introducing part 211 for a solution of dioxins. The connecting part 220 is formed into a cylindrical shape having a smaller diameter than the main body part 210, and is open at its lower end.

The purification layer 230 is a multilayer silica gel in which a silver nitrate silica gel layer 231, a first silica gel layer 232, a sulfuric acid silica gel layer 233 and a second silica gel layer 234 are stacked in this order from the side of the introducing part 211.

The silver nitrate silica gel layer 231 is made up of silver nitrate silica gel, and is provided for degrading or adsorbing some impurities mixed in a solution of dioxins. The silver nitrate silica gel used herein is prepared by uniformly adding an aqueous solution of silver nitrate on the surface of particulate silica gel (typically, active silica gel whose activity is enhanced by heating) having a particle size of about 40 to 210 µm and then removing moisture by heating under reduced pressure. Typically, the amount of the aqueous silver nitrate solution added to the silica gel is set preferably in the range of 5 to 20% of the weight of the silica gel.

While packing density of the silver nitrate silica gel in the silver nitrate silica gel layer 231 is not particularly limited, it is typically set preferably in the range of 0.3 to 0.8 g/cm³, and more preferably in the range of 0.4 to 0.7 g/cm³.

The sulfuric acid silica gel layer 233 is made up of sulfuric acid silica gel, and is provided for degrading or trapping some impurities other than dioxins mixed in a solution of dioxins. The sulfuric acid silica gel used herein is prepared by uniformly adding concentrated sulfuric acid on the surface of particulate silica gel (typically, active silica gel whose activity is enhanced by heating) having a particle size of about 40 to 210 µm. Typically, the amount of concentrated sulfuric acid added to the silica gel is set preferably in the range of 10 to 130% of the weight of the silica gel.

While packing density of the sulfuric acid silica gel in the sulfuric acid silica gel layer 233 is not particularly limited, it is typically set preferably in the range of 0.3 to 1. 1 g/cm³, and more preferably in the range of 0.5 to 1.0 g/cm³.

The first silica gel layer 232 is provided to prevent the silver nitrate silica gel layer 231 and the sulfuric acid silica gel layer 233 from directly coming into contact with each other to result in mutual chemical reaction, and is made up of particulate silica gel having a particle size of about 40 to 210 µm. The silica gel used herein may have appropriately increased activity by heating.

The second silica gel layer 234 is formed of silica gel similar to that of the first silica gel layer 232, and is provided for trapping some impurities degraded by reaction with the sulfuric acid silica gel layer 233, a degradation product and sulfuric acid eluted from the sulfuric acid silica gel layer 233, to prevent them from moving toward the solute trapping column 300.

In the purification layer 230, as to the ratio between the silver nitrate silica gel layer 231 and the sulfuric acid silica gel layer 233, the weight ratio of the sulfuric acid silica gel layer 233 to the silver nitrate silica gel layer 231 is preferably set at 1.0 to 50 times, and more preferably at 3.0 to 30 times. When the weight ratio of the sulfuric acid silica gel layer 233 is more than 50 times, the proportion of the silver nitrate silica gel layer 231 is relatively small, so that in the purification layer 230, the ability to trap the impurities contained in a solution of dioxins can be insufficient. Contrarily, when the weight ratio of the sulfuric acid silica gel layer 233 is less than 1.0 time, the ability to degrade the impurities contained in a solution of dioxins can be insufficient in the purification layer 230.

The size of the purification column 200 can be appropriately set in accordance with the amount of a solution of dioxins to be treated by the solute extracting apparatus 100, and is not particularly limited. However, when the amount of a solution of dioxins is about 1 to 20 mL, for example, the size of the part capable of being packed with the purification layer 230 is preferably set to have an inner diameter of 10 to 20 mm and a length of about 100 to 300 mm.

A first heating device 250 is disposed to surround the outer periphery of the purification column 200. The first heating device 250 is provided for heating the silver nitrate silica gel layer 231 and the first silica gel layer 232 of the purification layer 230, and part of the sulfuric acid silica gel layer 233, namely, the part neighboring the silver nitrate-impregnated silica gel layer 231.

The solute trapping column 300 is provided for trapping dioxins contained in a solution of dioxins, and is formed into a cylinder of a similar material to that of the purification column 200, which opens at its upper end and lower end.

The solute trapping column 300 has a main body part 310 in which a plurality of trapping agent layers, namely, a first trapping agent layer 340 and a second trapping agent layer 350 are packed, two branched pathways projecting from the main body part 310, namely, a first branched pathway 320 and a second branched pathway 330 projecting from the main body part 310 with a distance interposed therebetween.

The first trapping agent layer 340 includes an activated carbon-containing silica gel layer 341 and a graphite-containing silica gel layer 342.

The activated carbon-containing silica gel layer 341 is disposed on the side of the purification column 200 in the first trapping agent layer 340, and is made up of a mixture of activated carbon and particulate silica gel. Such a mixture may be activated carbon-dispersed silica gel obtainable by simply mixing activated carbon and silica gel, or may be activated carbon-embedded silica gel obtainable by reacting a mixture of sodium silicate (water glass) and activated carbon with mineral acid. As the activated carbon, any commercially available products may be used, however, typically particulate or powder materials having a particle size of about 40 to 100 µm, and having a specific surface area measured by the BET method of 100 to 1,200 m²/g, and particularly 500 to 1,000 m²/g are preferred. As the silica gel in the activated carbon-dispersed silica gel, the one similar to that in the first silica gel layer 232 is used.

The proportion of activated carbon in the mixture of activated carbon and silica gel is preferably 0.013 to 5.0% by weight, and more preferably 0.1 to 3.0% by weight. When the proportion of activated carbon is less than 0.013% by weight or more than 5.0% by weight, the ability to trap PCDDs having a large number of chlorine atoms, or PCDFs having a large number of chlorine atoms can be deteriorated in the first trapping agent layer 340.

While packing density of the activated carbon-containing silica gel layer 341 is not particularly limited, it is typically set preferably in the range of 0.3 to 0.8 g/cm³, and more preferably in the range of 0.45 to 0.6 g/cm³.

The graphite-containing silica gel layer 342 is disposed adjacent to the activated carbon-containing silica gel layer 341 in the first trapping agent layer 340, and is made up of a mixture obtainable by simply mixing graphite and particulate silica gel. As the graphite, any commercially available products may be used, however, typically particulate or powder materials having a particle size of about 40 to 200 µm, and having a specific surface area measured by the BET method of 10 to 500 m²/g, and particularly 50 to 200 m²/g are preferred. As the silica gel, the one similar to that in the first silica gel layer 232 is used.

The proportion of graphite in the mixture of graphite and silica gel is preferably 2.5 to 50% by weight, and more preferably 5 to 25% by weight. When the proportion of graphite is less than 2.5% by weight, the ability to trap non-ortho PCBs can be deteriorated in the first trapping agent layer 340. Contrarily, when the proportion of graphite is more than 50% by weight, non-DL-PCBs, in particular, non-DL-PCBs having 1 to 2 chlorine atoms can be more likely to be trapped in the first trapping agent layer 340.

While packing density of the graphite-containing silica gel layer 342 is not particularly limited, it is typically set preferably in the range of 0.2 to 0.6 g/cm³, and more preferably in the range of 0.3 to 0.5 g/cm³.

In the first trapping agent layer 340, the ratio between the activated carbon-containing silica gel layer 341 and the graphite-containing silica gel layer 342 is set preferably 1 : 1 to 1 : 12, and more preferably 1 : 1 to 1 : 9 by the volume ratio (A : B) between the layer 340 (A) and the layer 341 (B) . When the proportion of the activated carbon-containing silica gel layer 341 is smaller than the proportion defined by the above volume ratio, the ability to trap part of PCDDs and PCDFs, in particular, both PCDDs and PCDFs having 8 chlorine atoms can be deteriorated in the first trapping agent layer 340. Contrarily, when the proportion of the activated carbon-containing silica gel layer 341 is larger, mono-ortho PCBs can be more likely to be trapped in the first trapping agent layer 340.

The second trapping agent layer 350 is disposed in the main body part 310 with a space interposed between the first trapping agent layer 340 and the same, and is formed of particulate alumina. The alumina used herein may be any one of basic alumina, neutral alumina and acidic alumina. The activity of the alumina is not particularly limited. A preferred particle size of alumina is typically 40 to 300 µm.

While packing density of alumina in the second trapping agent layer 350 is not particularly limited, it is typically set preferably in the range of 0.5 to 1.2 g/cm³, and more preferably in the range of 0.8 to 1.1 g/cm³.

The first branched pathway 320 projects horizontally from the part between the opening on the upper end side of the main body part 310 (the part corresponds to an injection part having an injection port for a solution of dioxins; the opening corresponds to the injection port for a solution of dioxins) and the first trapping agent layer 340, and has an open distal end. The interior of the first branched pathway 320 communicates inside the main body part 310. The second branched pathway 330 projects horizontally from the part between the first trapping agent layer 340 and the second trapping agent layer 350, and has an open distal end. The interior of the second branched pathway 330 communicates inside the main body part 310.

The size of the main body part 310 of the solute trapping column 300 can be appropriately set in accordance with the amount of a solution of dioxins to be treated by the solute extracting apparatus 100 likewise the purification column 200, and is not particularly limited. However, when the amount of a solution of dioxins is about 1 to 20 mL, for example, it is preferred that the inner diameter is set at 3 to 10 mm, the length of the part capable of being packed with the first trapping agent layer 340 is set at about 20 to 80 mm, and the length of the part capable of being packed with the second trapping agent layer 350 is set at about 20 to 80 mm.

Regarding the solute trapping column 300, a second heating device 360 is disposed to surround the outer periphery of the part packed with the first trapping agent layer 340, and also a third heating device 370 is disposed to surround the outer periphery of the part packed with the second trapping agent layer 350.

In the solute trapping column 300, an upper end part of the main body part 310 is connected with the connecting part 220 of the purification column 200 by means of a connecting tool 260. The connecting tool 260 is formed into a cylindrical shape by using, for example, a resin material or other materials having resistance to various organic solvents, in particular, to hydrocarbon solvents, and detachably connects the purification column 200 with the solute trapping column 300 in a liquid tight manner by inserting the connecting part 220 of the purification column 200, and an upper end part of the main body part 310 of the solute trapping column 300 from openings of both ends.

The supplying device 400 serves as a first solvent supplying device for supplying the solute trapping column 300 with a developing solvent through the purification column 200, as a second solvent supplying device for supplying the solute trapping column 300 with an extraction solvent, and as an air supplying device for supplying the solute trapping column 300 with an air flow, and mainly includes a first supplying pathway 500 for supplying a developing solvent, a second supplying pathway 550 for supplying an extraction solvent, a first ventilation pathway 600, a second ventilation pathway 700, an air supplying pathway 800 and an operation switching device 900 for switching operation of the supplying device 400.

The first supplying pathway 500 extends from the operation switching device 900, and has a first valve 510. The first valve 510 is provided for opening or closing the first supplying pathway 500. The distal end part of the first supplying pathway 500 can be attached to/detached from the introducing part 211 of the purification column 200, and can close off the introducing part 211 airtightly when it is attached to the introducing part 211.

The second supplying pathway 550 extends from the operation switching device 900, and has a second valve 560. The second valve 560 is a three-way valve, and communicates with an introducing channel 570 that airtightly communicates with the opening of the lower end of the solute trapping column 300, and a waste fluid channel 580 for letting a waste fluid from the solute trapping column 300 flow. The introducing channel 570 is a replaceable tube formed of a flexible material such as a rubber or a resin.

The first ventilation pathway 600 extends from the first branched pathway 320, and has a first pathway 610 having a pinch valve 620. The first pathway 610 is a replaceable tube formed of a flexible material such as a rubber or a resin, and has one end airtightly communicating with the first branched pathway 320 and the other end airtightly inserted into a first recovery container 630 for recovering a solvent. The first pathway 610 is replaceable in the first ventilation pathway 600. Into the first recovery container 630, one end of a second pathway 640 is airtightly inserted separately from the first pathway 610. The second pathway 640 communicates with a third valve 650. The third valve 650 is a three-way valve, and communicates with an open channel 660 to the atmosphere, and a first air supplying pathway 810 of the air supplying pathway 800 as will be described later.

The second ventilation pathway 700 extends from the second branched pathway 330, and has a first pathway 710 having a pinch valve 720. The first pathway 710 is a replaceable tube formed of a flexible material such as a rubber or a resin, and has one end airtightly communicating with the second branched pathway 330 and the other end airtightly inserted into a second recovery container 730 for recovering a solvent. The first pathway 710 is replaceable in the second ventilation pathway 700. Into the second recovery container 730, one end of a second pathway 740 is airtightly inserted separately from the first pathway 710. The second pathway 740 communicates with a fourth valve 750. The fourth valve 750 is a three-way valve, and communicates with an open channel 760 to the atmosphere, and a second air supplying pathway 820 of the air supplying pathway 800 as will be described later.

The air supplying pathway 800 extends from the operation switching device 900, and is branched into the first air supplying pathway 810 and the second air supplying pathway 820. The first air supplying pathway 810 communicates with the third valve 650 of the first ventilation pathway 600. The second air supplying pathway 820 communicates with the fourth valve 750 of the second ventilation pathway 700.

The operation switching device 900 has a five-way valve 910 and a four-way valve 920, and these valves communicate with each other through a communication pathway 930 having a pump 931.

The five-way valve 910 communicates with the first supplying pathway 500, the second supplying pathway 550 and the air supplying pathway 800, as well as a solvent recovery pathway 970. The solvent recovery pathway 970 has a waste solvent container 971. The five-way valve 910 can switch a communication between the communication pathway 930 and any of the other pathways, namely, the first supplying pathway 500, the second supplying pathway 550, the air supplying pathway 800 and the solvent recovery pathway 970.

The four-way valve 920 communicates with a first flow channel 940 extending from a first solvent container 941 for reserving a developing solvent, a second flow channel 950 extending from a second solvent container 951 for reserving an extraction solvent, and an atmosphere introducing channel 960 having an air filter 961. The four-way valve 920 can switch a communication between the communication pathway 930 and any one of the channels, namely, the first flow channel 940, the second flow channel 950 and the atmosphere introducing channel 960.

The developing solvent reserved in the first solvent container 941 can dissolve dioxins, and is typically, an aliphatic hydrocarbon solvent, preferably an aliphatic saturated hydrocarbon solvent having 5 to 8 carbon atoms. Examples thereof include n-pentane, n-hexane, n-heptane, n-octane, isooctane and cyclohexane. These solvents may be used as a mixture as appropriate.

The extraction solvent reserved in the second solvent container 951 can dissolve dioxins, and can be selected according to the analytical method for dioxins as will be described later. When a gas chromatography method is employed as the analytical method, solvents suited for the method, for example, toluene or benzene can be used. Also, a mixed solvent obtained by adding an aliphatic hydrocarbon solvent or an organic chlorine solvent to toluene or benzene can be used. When the mixed solvent is used, the proportion of toluene or benzene is set at 50% by weight or higher. Examples of the aliphatic hydrocarbon solvent usable in the mixed solvent include n-pentane, n-hexane, n-heptane, n-octane, isooctane and cyclohexane. Examples of the organic chlorine solvent include dichloromethane, trichloromethane and tetrachloromethane. Among the above extraction solvents, toluene is particularly preferred because dioxins can be extracted with the use of a small amount thereof.

When a bioassay method is employed as the analytical method, solvents suited for the method, for example, a hydrophilic solvent such as dimethyl sulfoxide (DMSO) or methanol is used.

The solute extracting apparatus 100 has a controlling device, which is not illustrated in the drawings, for controlling operation thereof. The controlling device is, for example, a computer, and controls operation of each part of the solute extracting apparatus 100 according to a program.

Referring to Figs. 1 to 11, operation of the above-described solute extracting apparatus 100 will be described. In the drawings, for convenience of understanding, the first valve 510, the second valve 560, the third valve 650, the fourth valve 750 and the pinch valves 620, 720 are indicated by solid when they are in a communicated state. Also in various pathways, the part where the pathway is established is indicated by a bold line, accompanied by an arrow indicating the flow direction of a solvent or the like for convenience of understanding.

When an operator activates the solute extracting apparatus 100, the controlling device puts the solute extracting apparatus 100 into the following initial state (see Fig. 1) . In the initial state, positions of the five-way valve 910 and the four-way valve 920 are not particularly restricted.
First valve 510: Close
Second valve 560: Connect the introducing channel 570 with the waste fluid channel 580
Third valve 650: Connect the second pathway 640 with the first air supplying pathway 810
Fourth valve 750: Connect the second pathway 740 with the second air supplying pathway 820
Pinch valves 620, 720: Close
Pump 931: Keep a non-operating state

By this initial setting, the first ventilation pathway 600 and the second ventilation pathway 700 are closed off to the atmosphere.

In this initial state, the operator can remove the first supplying pathway 500 from the introducing part 211 of the purification column 200, and inject a solution of dioxins into the purification column 200 through the introducing part 211.

A solution of dioxins that can be injected herein is an extract prepared by extracting dioxins by using a solvent from a sample possibly containing dioxins such as an environmental sample including the atmospheric air and soil, or a food sample. However, an oily food possibly containing dioxins, for example an oil obtained from fish (fish oil), itself may be used. Such a solution of dioxins often contains polychlorinated polycyclic aromatic hydrocarbons such as PCDE and non-DL-PCBs that resemble dioxins in chemical structure and chemical behavior and can influence on the analytical result of dioxins, as impurities.

In the case of an extract from a soil sample, the extract often contains paraffins (straight-chain hydrocarbon compounds) contained in the soil in a considerable amount, as impurities. Paraffins are easily adsorbed to carbon-based adsorbing agents along with PCDDs, PCDFs and non-ortho PCBs, and are easily extracted from the adsorbing agents together with PCDDs, PCDFs and non-ortho PCBs. Therefore, they are known as causative substances for lock mass fluctuation that influences on the analytic accuracy in the case of analyzing dioxins by GC/MS method, in particular, by GC-HRMS method.

Typically, the extract of dioxins can be directly injected into the purification column 200 as far as the extract is based on an aliphatic hydrocarbon solvent. When the extract is obtained by extraction using an organic solvent other than an aliphatic hydrocarbon solvent, for example an aromatic hydrocarbon solvent such as toluene, the extract can be injected into the purification column 200 by replacing the aromatic hydrocarbon solvent used for extraction with an aliphatic hydrocarbon solvent. Typically, the aliphatic hydrocarbon solvent used for extraction or solvent replacement is preferably an aliphatic hydrocarbon solvent having 5 to 10 carbon atoms, for example, n-hexane, isooctane, nonane and decane. In particular, inexpensive n-hexane is preferred.

Generally, the injection amount of a solution of dioxins into the purification column 200 is preferably about 1 to 10 mL. The solution to be injected may be concentrated by distilling off part of the solvent.

When a solution of dioxins is an oily substance such as fish oil, the solution of dioxins may be injected into the purification column 200 together with an aliphatic hydrocarbon solvent capable of dissolving the same, or as a solution obtained by preliminarily dissolving the same in the solvent. In this case, the solution of dioxins and the aliphatic hydrocarbon solvent are adjusted so that the total amount is equal to the above-described injection amount.

The dioxins solution injected by the operator permeates into the purification layer 230 and is retained therein.

When the operator restores the first supplying pathway 500 to the introducing part 211 after injecting the solution of dioxins, the controlling device actuates the first heating device 250 to heat the purification column 200. A heating temperature by the first heating device 250 is set at 35°C or higher, preferably 50°C or higher, and more preferably 60°C or higher. By this heating, some impurities contained with dioxins in the solution of dioxins react with the purification layer 230 and are degraded. When the heating temperature is less than 35°C, the reaction between the impurities and the purification layer 230 is less likely to advance, and part of the impurities can be more likely to remain in the extract of dioxins obtained by the solute extracting apparatus 100. The upper limit of the heating temperature is not particularly limited. However, typically, it is preferably less than or equal to the boiling temperature from the view point of the safety.

The reaction between the silver nitrate silica gel layer 231 and the sulfuric acid silica gel layer 233 during heating is suppressed as they are stacked with the first silica gel layer 232 interposed therebetween.

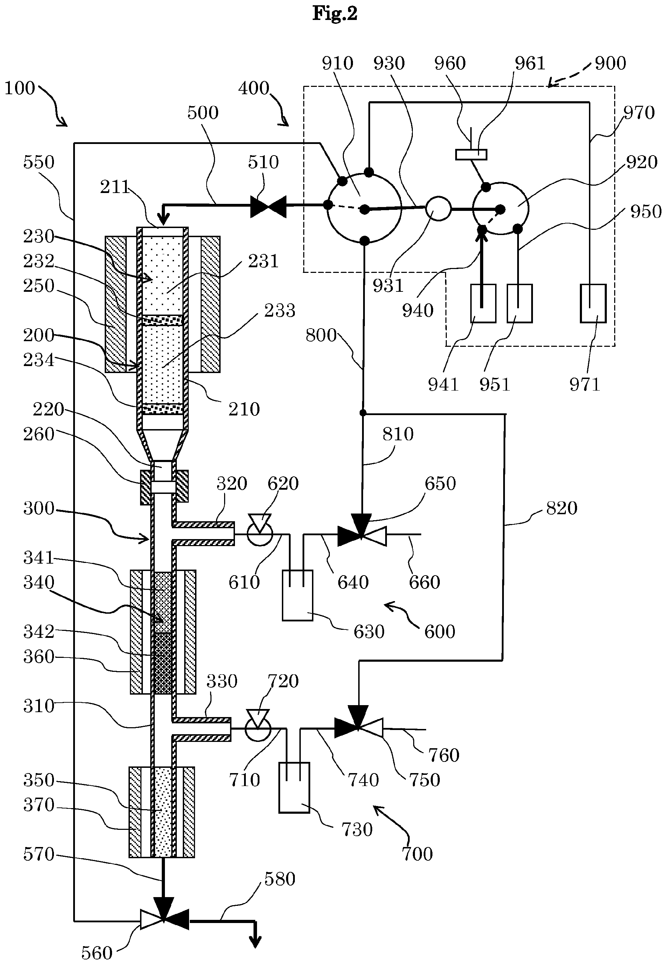

After a lapse of 10 to 60 minutes from the start of heating, the controlling device performs a developing solvent supplying step while keeping heating of the purification column 200. In this step, the controlling device changes the setting of each part as follows from the initial states (see Fig. 2), and then actuates the pump 931.
First valve 510: Open
Five-way valve 910: Connect the first supplying pathway 500 with the communication pathway 930
Four-way valve 920: Connect the first flow channel 940 with the communication pathway 930

As shown in Fig. 2, the actuated pump 931 aspirates the developing solvent reserved in the first solvent container 941, and continuously supplies the developing solvent into the purification column 200 through the first flow channel 940, the communication pathway 930 and the first supplying pathway 500. In the case where the sizes of the purification column 200 and the solute trapping column 300 are set as previously mentioned, normally, the supply speed of the developing solvent is preferably set at 0.5 to 5.0 mL/minute by controlling the pump 931, and normally, the total amount of the developing solvent to be supplied is preferably set at 50 to 150 mL.

The developing solvent supplied to the purification column 200 dissolves dioxins, degraded products of impurities, and impurities remaining undegraded (non-DL-PCBs are included in the impurities) contained in the solution of dioxins, and passes through the purification layer 230 as a solution containing dioxins in a developing solvent, namely as a solution of dioxins in an aliphatic hydrocarbon solvent. In this case, part of the degraded products and impurities are adsorbed to the silver nitrate silica gel layer 231, the first silica gel layer 232, the sulfuric acid silica gel layer 233 and the second silica gel layer 234. The developing solvent passing through the purification layer 230 is naturally cooled when it passes through the part not heated by the first heating device 250, namely, a lower part of the sulfuric acid silica gel layer 233 and the second silica gel layer 234.

The developing solvent having passed through the purification layer 230 flows into the solute trapping column 300, passes through the first trapping agent layer 340 and the second trapping agent layer 350, and flows into the introducing channel 570 through the opening at the lower end of the solute trapping column 300, and is then disposed of through the waste fluid channel 580. In this case, dioxins contained in the developing solvent from the purification layer 230 are developed and trapped in the first trapping agent layer 340 and the second trapping agent layer 350, and are thus separated from the developing solvent. Specifically, among dioxins, non-ortho PCBs, PCDDs and PCDFs are trapped by the first trapping agent layer 340, and mono-ortho PCBs are trapped by the second trapping agent layer 350. Therefore, dioxins contained in the developing solvent are fractionated into a dioxin group including non-ortho PCBs, PCDDs and PCDFs, and mono-ortho PCBs in the solute trapping column 300.

Impurities contained in the developing solvent having passed through the purification layer 230 are partly disposed of together with the developing solvent passed through the solute trapping column 300, and partly trapped by the first trapping agent layer 340 or the second trapping agent layer 350. For example, non-DL-PCBs and PCDE are trapped by the second trapping agent layer 350 together with mono-ortho PCBs. On the other hand, paraffins pass through the solute trapping column 300 together with the developing solvent and are disposed of through the waste fluid channel 580.

In the above-described developing solvent supplying step, since the five-way valve 910 blocks connection between the air supplying pathway 800 and each part in the supplying device 400, and also the pinch valves 620, 720 are closed, both the first ventilation pathway 600 and the second ventilation pathway 700 come into the state that they do not communicate with the atmosphere. Therefore, the developing solvent having flowed into the solute trapping column 300 from the purification column 200 is blocked from flowing into the first branched pathway 320 and the second branched pathway 330, and is disposed of from the waste fluid channel 580 after smoothly passing through each of the trapping agent layers 340, 350.

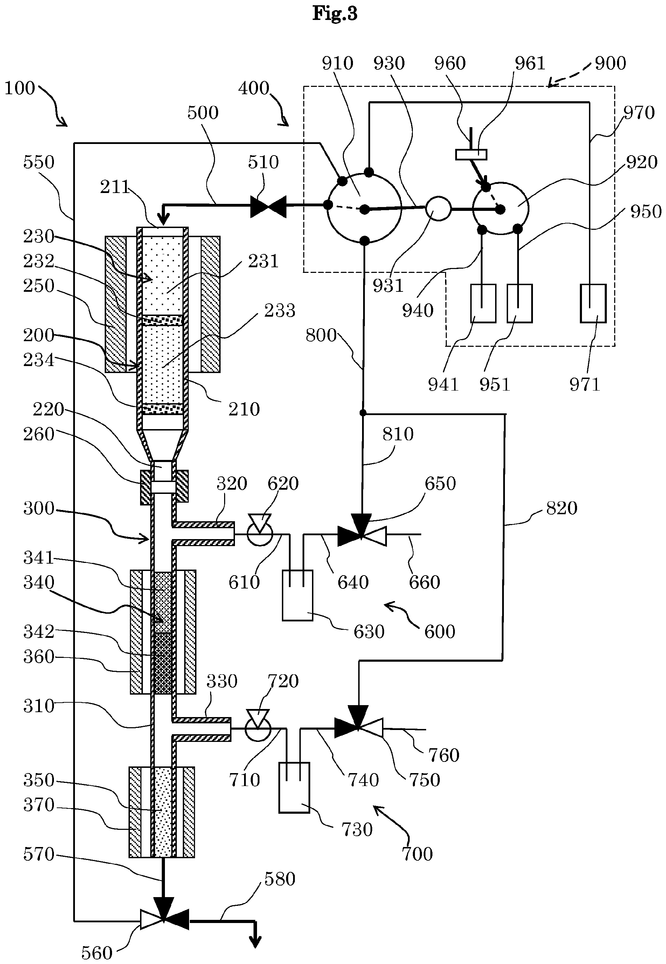

Following the developing solvent supplying step, the controlling device stops the first heating device 250 and the pump 931 to perform a step for drying the purification layer 230 in the purification column 200, and the first trapping agent layer 340 and the second trapping agent layer 350 in the solute trapping column 300. In the first operation of this step (drying operation 1), the controlling device changes the setting of each part as follows (see Fig. 3)from those in the developing solvent supplying step and then actuates the pump 931.
Four-way valve 920: Connect the atmosphere introducing channel 960 with the communication pathway 930

In the drying operation 1, as shown in Fig. 3, the pump 931 aspirates the atmospheric air from the atmosphere introducing channel 960, and continuously supplies clean air having passed through the air filter 961 into the purification column 200 via the communication pathway 930 and the first supplying pathway 500.

The air supplied into the purification column 200 passes through the purification layer 230 in this column, and both the first trapping agent layer 340 and the second trapping agent layer 350 in the solute trapping column 300, and is discharged from the waste fluid channel 580 through the introducing channel 570. In this process, the developing solvent remaining in the purification layer 230 as well as in the first trapping agent layer 340 and the second trapping agent layer 350 is pushed out by the passing air, and is discharged from the waste fluid channel 580 together with the passing air.

Preferably, the amount of the air to be supplied in the drying operation 1 is set so that the total amount reaches to 40 to 100 mL by gradually increasing the flow rate within the range of 1.0 to 10 mL/minute.

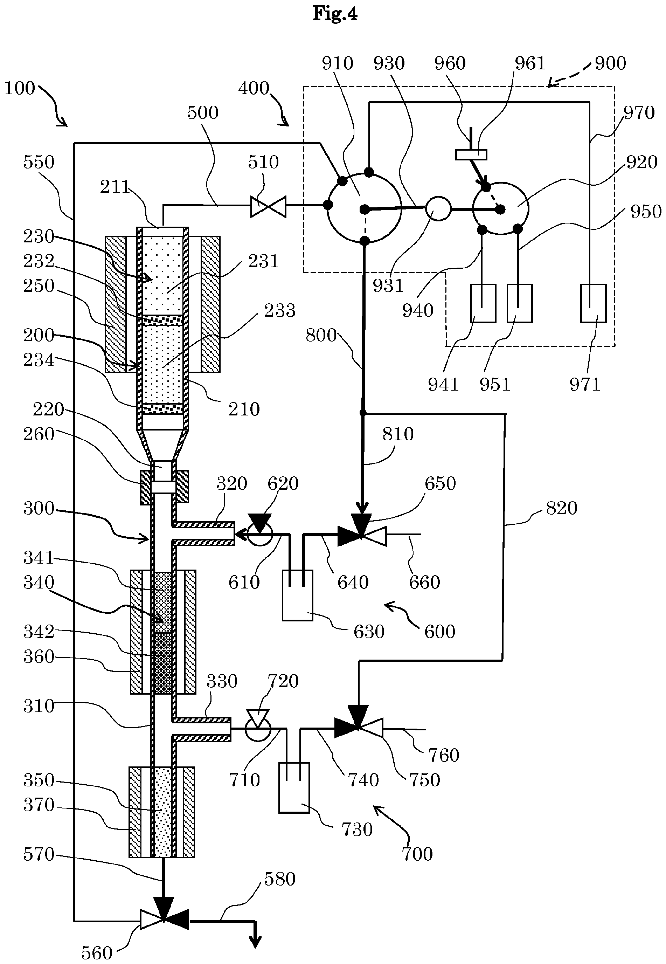

Following the drying operation 1, the controlling device stops the pump 931, and changes the setting status of each part in the drying operation 1 as follows (see Fig. 4), and then actuates the pump 931 to perform the next drying operation (drying operation 2).
First valve 510: Close
Five-way valve 910: Connect the communication pathway 930 with the air supplying pathway 800
Pinch valve 620: Open

In the drying operation 2, clean air from the atmosphere introducing channel 960 flows into the air supplying pathway 800 from the communication pathway 930 as shown in Fig. 4. Since the pinch valve 720 of the second ventilation pathway 700 is closed, the air having flowed into the air supplying pathway 800 flows into the first air supplying pathway 810, and is continuously supplied into the solute trapping column 300 from the first branched pathway 320 through the second pathway 640, the first recovery container 630 and the first pathway 610. The air supplied into the solute trapping column 300 passes through the first trapping agent layer 340 and the second trapping agent layer 350, and is then discharged from the waste fluid channel 580 through the introducing channel 570. In this process, the developing solvent remaining in both the first trapping agent layer 340 and the second trapping agent layer 350 is pushed out by the passing air, and is discharged from the waste fluid channel 580 together with the passing air. As a result, the developing solvent remaining in both the first trapping agent layer 340 and the second trapping agent layer 350 is removed more efficiently, and in particular, the drying state of the first trapping agent layer 340 is further advanced.

Generally, the amount of the air to be supplied in the drying operation 2 is preferably set at an amount supplied in about several minutes at a flow rate of 50 to 200 mL/minute.

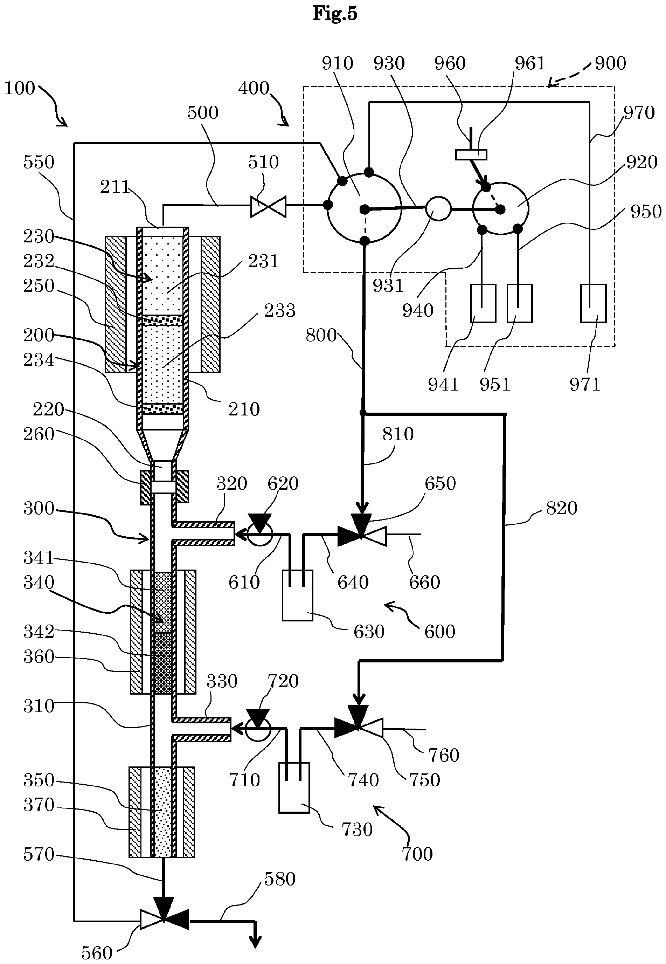

Following the drying operation 2, the controlling device changes the setting of each part in the drying operation 2 as follows (see Fig. 5) while keeping the pump 931 operating, and performs the next drying operation (drying operation 3).
Pinch valve 720: Open

In the drying operation 3, the air having flowed into the air supplying pathway 800 from the communication pathway 930 splits and flows into the first air supplying pathway 810 and the second air supplying pathway 820, as shown in Fig. 5. The air having flowed into the first air supplying pathway 810 is continuously supplied into the solute trapping column 300 from the first branched pathway 320 in the same manner as in the drying operation 2, and passes through the first trapping agent layer 340 and the second trapping agent layer 350 to be discharged from the waste fluid channel 580 through the introducing channel 570. On the other hand, the air having flowed into the second air supplying pathway 820 is continuously supplied into the solute trapping column 300 from the second branched pathway 330 though the second pathway 740, the second recovery container 730 and the first pathway 710. The air having supplied into the solute trapping column 300 from the second branched pathway 330 joins the air having passed through the first trapping agent layer 340 and passes through the second trapping agent layer 350, and is then discharged from the waste fluid channel 580 through the introducing channel 570.

In the drying operation 3, the developing solvent remaining in both the first trapping agent layer 340 and the second trapping agent layer 350 is pushed out by the passing air, and is discharged from the waste fluid channel 580 together with the passing air. As a result, the developing solvent remaining in both the first trapping agent layer 340 and the second trapping agent layer 350 is removed more efficiently, and in particular, the drying state of the second trapping agent layer 350 is further advanced.

Generally, the amount of the air to be supplied in the drying operation 3 is preferably set at an amount supplied in about several minutes at a flow rate of 50 to 200 mL/minute.

Following the drying step by the drying operations 1 to 3, the controlling device stops the pump 931 and returns the solute extracting apparatus 100 to the initial state. Then, the controlling device actuates the second heating device 360 and the third heating device 370 to start heating of the first trapping agent layer 340 and the second trapping agent layer 350 in the solute trapping column 300. It is preferred to heat both the first trapping agent layer 340 and the second trapping agent layer 350 so that their internal temperatures are about 80 to 95°C. Typically, this heating is preferably continued until the later-described extraction step completes.

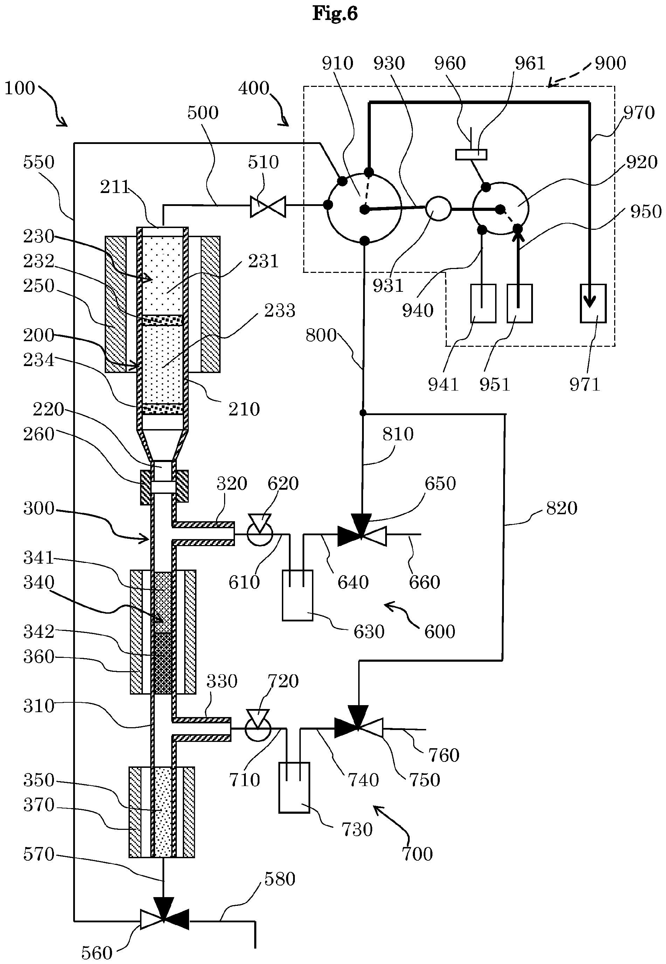

Next, the controlling device performs a preparation step for extraction of dioxins trapped in the solute trapping column 300. In the first operation of the preparation step (preparing operation 1), the controlling device changes the setting of the solute extracting apparatus 100 as follows from the initial state (see Fig. 6), and actuates the pump 931.
Five-way valve 910: Connect the communication pathway 930 with the solvent recovery pathway 970
Four-way valve 920: Connect the communication pathway 930 with the second flow channel 950

As shown in Fig. 6, the actuated pump 931 aspirates the extraction solvent reserved in the second solvent container 951. The aspirated extraction solvent flows through the second flow channel 950, the communication pathway 930 and the solvent recovery pathway 970, and is recovered in the waste solvent container 971. As a result, the second flow channel 950 and the communication pathway 930 are filled with the extraction solvent.

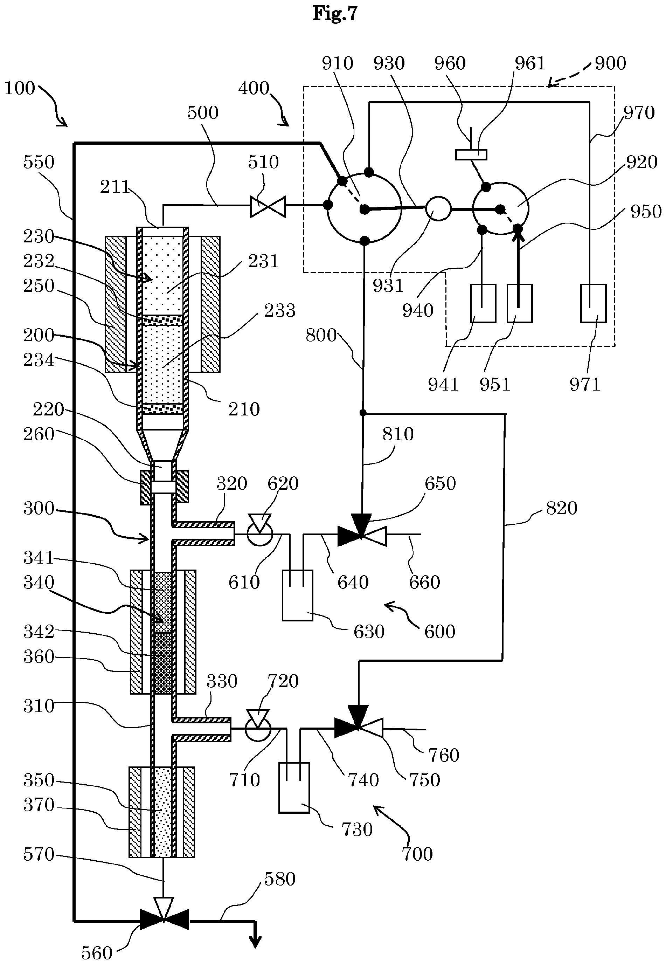

Following the preparing operation 1, the controlling device stops the pump 931 and changes the setting of each part in the preparing operation 1 as follows (see Fig. 7), and then actuates the pump 931 again to perform the next preparing operation (preparing operation 2).
Five-way valve 910: Connect the communication pathway 930 with the second supplying pathway 550
Second valve 560: Connect the second supplying pathway 550 with the waste fluid channel 580

In the preparing operation 2, the actuated pump 931 aspirates the extraction solvent reserved in the second solvent container 951 as shown in Fig. 7. The aspirated extraction solvent flows through the second flow channel 950, the communication pathway 930 and the second supplying pathway 550, and then is discharged from the waste fluid channel 580 through the second valve 560. As a result, in addition to the second flow channel 950 and the communication pathway 930, the second supplying pathway 550 is filled with the extraction solvent.

Following the preparation step by the preparing operations 1 to 2, the controlling device stops the pump 931, and performs an extraction step of dioxins from the solute trapping column 300. In the first operation of this step

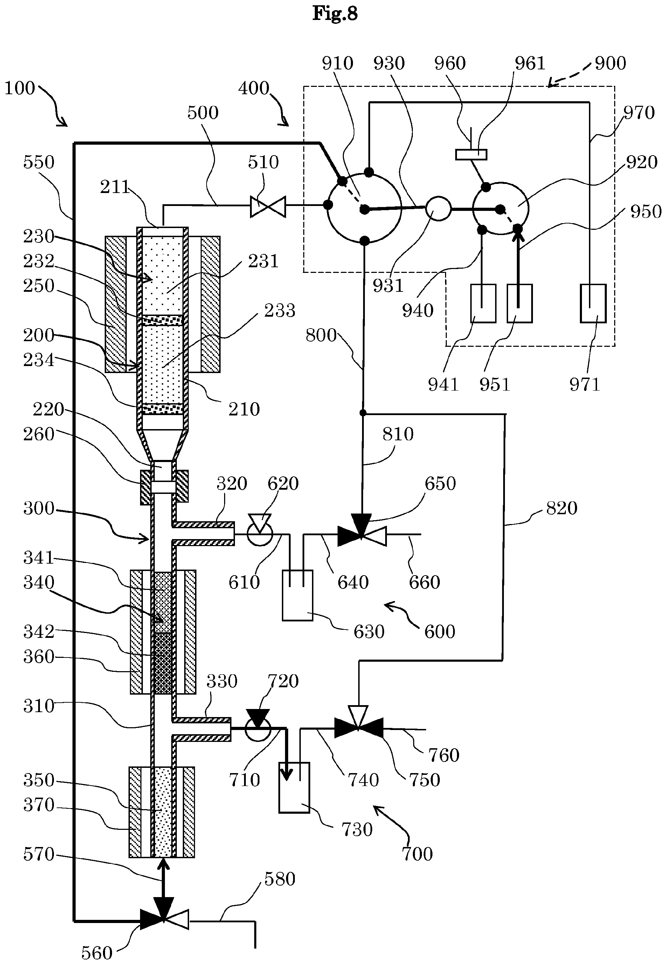

(extracting operation 1), the controlling device changes the setting of each part in the preparing operation 2 as follows (see Fig. 8), and then actuates the pump 931.
Second valve 560: Connect the second supplying pathway 550 with the introducing channel 570
Pinch valve 720: Open
Fourth valve 750: Connect the second pathway 740 with the open channel 760

In the extracting operation 1, as shown in Fig. 8, the extraction solvent aspirated by the pump 931 from the second solvent container 951 flows through the second flow channel 950, the communication pathway 930 and the second supplying pathway 550, and is then supplied into the solute trapping column 300 from the introducing channel 570 through the second valve 560.

Since the first valve 510 is closed, and communication between the first ventilation pathway 600 and the atmosphere system is blocked, the extraction solvent supplied into the solute trapping column 300 is blocked to flow toward the first trapping agent layer 340 after passing through the second trapping agent layer 350, and thereby the extraction solvent selectively flows into the second branched pathway 330. Therefore, the extraction solvent flows into the first pathway 710 from the second branched pathway 330, and is recovered in the second recovery container 730. In this process, the extraction solvent dissolves mono-ortho PCBs and non-DL-PCBs adsorbed to the second trapping agent layer 350, and is recovered in the second recovery container 730 as an extraction solution of these PCBs. The extraction solution obtained here hardly contains the developing solvent because the developing solvent has been removed from the second trapping agent layer 350 in the drying step.

In the extracting operation 1, since the second trapping agent layer 350 is heated by the third heating device 370, it is possible to extract the PCBs trapped by the second trapping agent layer 350 efficiently with a small amount of the extraction solvent. For example, when the flow rate of the extraction solvent supplied to the solute trapping column 300 is set at 0.1 to 1.0 mL/minute, the above PCBs can be extracted with about 0.5 to 1.5 mL of the extraction solvent.

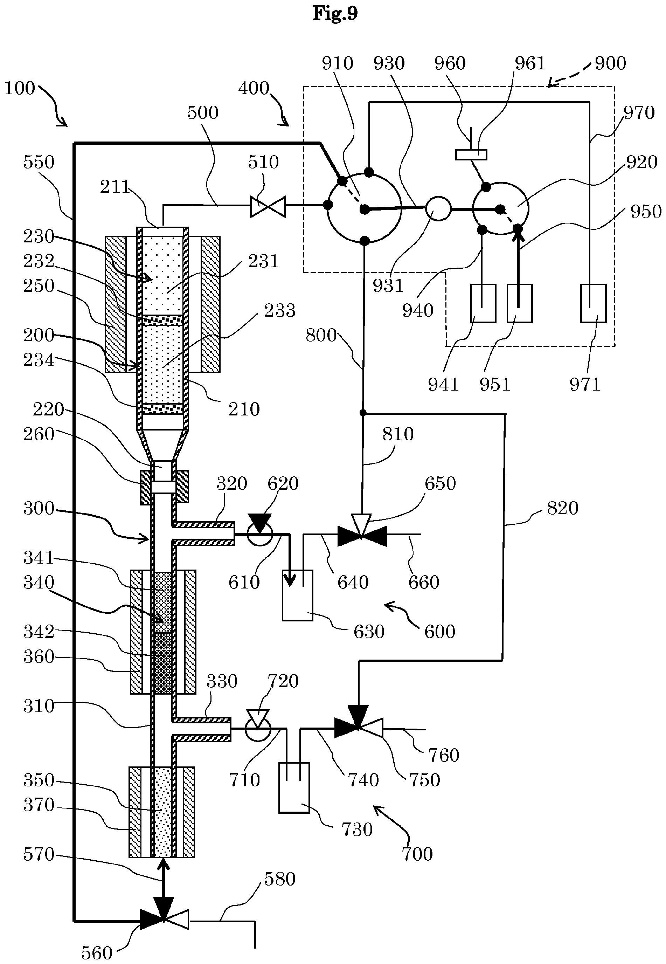

Following the extracting operation 1, the controlling device stops the pump 931, and changes the setting of each part in the extracting operation 1 as follows (see Fig. 9), and then actuates the pump 931 to perform the next extracting operation (extracting operation 2).
Pinch valve 720: Close
Fourth valve 750: Connect the second pathway 740 with the second air supplying pathway 820
Pinch valve 620: Open
Third valve 650: Connect the second pathway 640 with the open channel 660

In the extracting operation 2, as shown in Fig. 9, the extraction solvent aspirated by the pump 931 from the second solvent container 951 is supplied into the solute trapping column 300 in the same manner as in the extracting operation 1. Since the first valve 510 is closed, and the second ventilation pathway 700 is at the state that it does not communicate with the atmosphere, the extraction solvent supplied into the solute trapping column 300 is blocked to flow into the second branched pathway 330 after passing through the second trapping agent layer 350, and passes through the first trapping agent layer 340 to selectively flow into the first branched pathway 320. Therefore, the extraction solvent flows into the first pathway 610 from the first branched pathway 320, and is recovered in the first recovery container 630. In this process, the extraction solvent dissolves the dioxin group including non-ortho PCBs, PCDDs and PCDFs trapped by the first trapping agent layer 340, and is recovered as an extraction solution of this dioxin group by the first recovery container 630. The extraction solution obtained here hardly contains the developing solvent because the developing solvent has been removed from the first trapping agent layer 340 and the second trapping agent layer 350 in the drying step.

In the extracting operation 2, since the first trapping agent layer 340 is heated by the second heating device 360, it is possible to extract the dioxins trapped by the first trapping agent layer 340 efficiently with a small amount of the extraction solvent. For example, when the flow rate of the extraction solvent supplied to the solute trapping column 300 is set at 0.1 to 1.0 mL/minute, the dioxins can be extracted with about 0.5 to 1.5 mL of the extraction solvent.

By the above extraction step, the extraction solution of PCBs recovered in the second recovery container 730, namely an analytical sample for mono-ortho PCBs, and the extraction solution of dioxins recovered in the first recovery container 630, namely an analytical sample for non-ortho PCBs, PCDDs and PCDFs can be separately obtained.

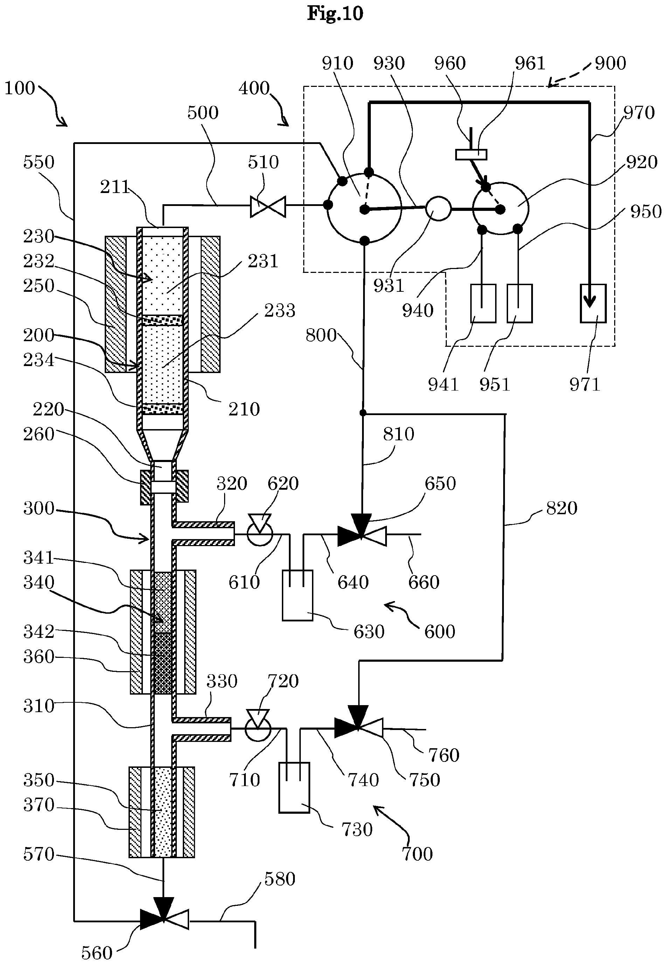

Following the extraction step by the extracting operations 1 to 2, the controlling device stops the pump 931, and performs a washing step of the solute trapping apparatus 100. In the first operation of this step (washing operation 1), the controlling device changes the setting of each part as follows from the state of the extracting operation 2 (see Fig. 10), and then momentarily actuates the pump 931.
Five-way valve 910: Connect the communication pathway 930 with the solvent recovery pathway 970
Four-way valve 920: Connect the atmosphere introducing channel 960 with the communication pathway 930
Third valve 650: Connect the second pathway 640 with the first air supplying pathway 810
Pinch valve 620: Close

In the washing operation 1, as shown in Fig. 10, the momentarily actuated pump 931 aspirates the atmospheric air from the atmosphere introducing channel 960, and feeds the air to the solvent recovery pathway 970 through the communication pathway 930. As a result, the extraction solvent remaining in the communication pathway 930 is pushed out into the solvent recovery pathway 970, and recovered in the waste solvent container 971.

Following the washing operation 1, the controlling device stops the pump 931, and sets the setting of each part in the same manner as in the drying operation 2 (see Fig. 4), and then actuates the pump 931 to perform the next washing operation (washing operation 2). Here, the air aspirated from the atmosphere introducing channel 960 flows in the same manner as in the drying operation 2, and is supplied into the solute trapping column 300 from the first branched pathway 320, and is discharged from the waste fluid channel 580 through the introducing channel 570 after passing through the first trapping agent layer 340 and the second trapping agent layer 350. In this process, the extraction solvent remaining in the first trapping agent layer 340 and the second trapping agent layer 350 is pushed out by the passing air, and discharged from the waste fluid channel 580 together with the passing air.

Following the washing operation 2, the controlling device stops the pump 931, and sets the setting of each part in the same manner as in the drying operation 3 (see Fig. 5), and then actuates the pump 931 to perform the next washing operation (washing operation 3). Here, the air aspirated from the atmosphere introducing channel 960 flows in the same manner as in the drying operation 3, and is supplied into the solute trapping column 300 from the first branched pathway 320 and the second branched pathway 330, and is discharged from the waste fluid channel 580 through the introducing channel 570 after passing through the first trapping agent layer 340 and the second trapping agent layer 350. In this process, the extraction solvent remaining in the first trapping agent layer 340 and the second trapping agent layer 350 is pushed out by the passing air, and discharged from the waste fluid channel 580 together with the passing air.

Following the washing operation 3, the controlling device stops the pump 931, and sets the setting of each part in the same manner as in the preparing step 1 (see Fig. 6), and then actuates the pump 931 to perform the next washing operation (washing operation 4). Here, since the extraction solvent aspirated from the second solvent container 951 flows through the second flow channel 950, the communication pathway 930 and the solvent recovery pathway 970, and is recovered in the waste solvent container 971, the second flow channel 950 and the communication pathway 930 are filled with the extraction solvent.

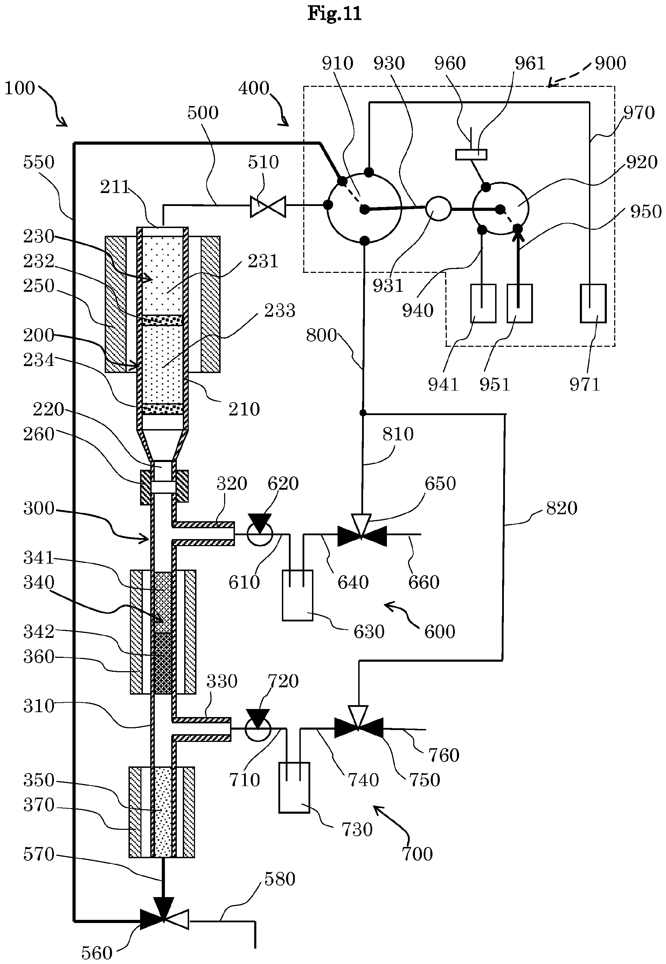

Following the washing operation 4, the controlling device stops the pump 931, and changes the setting of each part as follows (see Fig. 11), and actuates the pump 931 again for a short time to perform the next washing operation (washing operation 5).
Five-way valve 910: Connect the communication pathway 930 with the second supplying pathway 550
Second valve 560: Connect the second supplying pathway 550 with the introducing channel 570
Pinch valve 620: Open

Third valve 650: Connect the second pathway 640 with the open channel 660
Pinch valve 720: Open
Fourth valve 750: Connect the second pathway 740 with the open channel 760

In the washing operation 5, the extraction solvent aspirated by the pump 931 from the second solvent container 951 flows through the second flow channel 950, the communication pathway 930 and the second supplying pathway 550, and then flows into the solute trapping column 300 from the introducing channel 570 through the second valve 560. However, since the operation time of the pump 931 is short, the extraction solvent is difficult to pass through the second trapping agent layer 350 due to pressure loss, and merely fills the introducing channel 570. As a result, the second valve 560 is washed with the extraction solvent.

Following the washing operation 5, the controlling device stops the pump 931, and sets the setting of each part in the same manner as in the washing operation 1 (see Fig. 10), and then momentarily actuates the pump 931 to perform the next washing operation (washing operation 6). Here, the air aspirated from the atmosphere introducing channel 960 flows into the solvent recovery pathway 970 from the communication pathway 930, and pushes the extraction solvent in the communication pathway 930 and the solvent recovery pathway 970 out into the waste solvent container 971.

Following the washing operation 6, the controlling device stops the pump 931, and sets the setting of each part in the same manner as in the drying operation 2 (see Fig. 4), and then momentarily actuates the pump 931 to perform the next washing operation (washing operation 7). Here, in the same manner as in the drying operation 2, the air aspirated from the atmosphere introducing channel 960 passes through the first trapping agent layer 340 and the second trapping agent layer 350, and flows into the waste fluid channel 580 through the introducing channel 570. As a result, the extraction solvent in the introducing channel 570 is pushed out and flows into the waste fluid channel 580.

Following the washing operation 7, the controlling device stops the pump 931, and sets the setting of each part in the same manner as in the drying operation 3 (see Fig. 5), and then momentarily actuates the pump 931 to perform the next washing operation (washing operation 8). Here, in the same manner as in the drying operation 3, the air aspirated from the atmosphere introducing channel 960 passes through the first trapping agent layer 340 and the second trapping agent layer 350, and flows into the waste fluid channel 580 through the introducing channel 570. As a result, the extraction solvent remaining in the introducing channel 570 and the second valve 560 after the washing operation 7 is pushed out and flows into the waste fluid channel 580 more securely.

The washing operations 5 to 7 may be repeated several times to improve the washing effect of the second valve 560.

After completion of the washing step consisting of the washing operations 1 to 7, the solute extracting apparatus 100 can be used for extraction of dioxins from a different solution of dioxins if the purification column 200, the solute trapping column 300, the first pathway 610 and the first recovery container 630 of the first ventilation pathway 600, the first pathway 710 and the second recovery container 730 of the second ventilation pathway 700, and the introducing channel 570 are replaced by new ones.

The two kinds of analytical samples obtained by using the solute extracting apparatus 100 are separately applied to analysis for dioxins. As an analytical method, depending on the kind of the used extraction solvent, typically, a gas chromatography method or a bioassay method can be employed. Examples of gas chromatography method include a GC/MS method such as GC-HRMS, GC-MSMS, GC-QMS and ion trap GC/MS, and a GC/ECD method.

In analysis of the sample for mono-ortho PCBs, since this sample contains substantially no dioxin group including non-ortho PCBs, PCDDs and PCDFs, it is possible to quantify mono-ortho PCBs with high accuracy without being influenced by the dioxin group. Further, since this sample contains non-DL-PCBs together with mono-ortho PCBs, it is possible to additionally quantify non-DL-PCBs contained in the dioxins solution with high accuracy. For example, a food regulation standard in the European Union (EU), COMMISSION REGULATION (EU) No 1259/2011, designates certain non-DL-PCBs (six kinds of PCBs having 3 to 7 chlorine atoms of IUPAC numbers: #28, #52, #101, #138, #153 and #180) as well as dioxins as analysis targets of harmful substances contained in foods including meat such as beef or pork and eggs, and these PCBs can be quantified by analysis of the above sample.

On the other hand, in analysis of the sample for non-ortho PCBs, PCDDs and PCDFs, which contains substantially no mono-ortho PCBs and non-DL-PCBs, it is possible to quantify non-ortho PCBs, PCDDs and PCDFs with high accuracy without being influenced by mono-ortho PCBs and non-DL-PCBs.

### Other embodiments

(1) In the purification column 200 used in the above-described embodiment, the silver nitrate silica gel layer 231 is disposed on the side of the introducing part 211 in the purification layer 230, however, the order of the silver nitrate silica gel layer 231 and the sulfuric acid silica gel layer 233 may be inversed.
   However, when interchanging the positions of the silver nitrate silica gel layer 231 and the sulfuric acid silica gel layer 233, non-DL-PCBs having a small number of chlorine atoms react with the sulfuric acid silica gel layer 233, so that the recovery rate of non-DL-PCBs having a small number of chlorine atoms in the analytical sample can be impaired. Therefore, in the case where non-DL-PCBs, in particular, non-DL-PCBs having a small number of chlorine atoms must be analyzed together with dioxins (for example, in the case where dioxins in foods are analyzed according to the food regulation standard in EU), it is preferred to arrange the silver nitrate silica gel layer 231 on the side of the introducing part 211 in the purification layer 230.
(2) In the purification column 200 described in the above-described embodiment, the first silica gel layer 232 and the second silica gel layer 234 may be omitted in the purification layer 230.
(3) While the solute extracting apparatus 100 according to the above-described embodiment includes the first heating device 250 for heating the purification column 200, and the second heating device 360 and the third heating device 370 for heating the solute trapping column 300, these heating devices may be omitted.
(4) In the above-described embodiment, two trapping agent layers, the first trapping agent layer 340 and the second trapping agent layer 350 are packed in the solute trapping column 300, however, layers for trapping a solute in the solute trapping column 300 may be comprised of three or more layers with a space interposed therebetween in a similar manner to the first trapping agent layer 340 and the second trapping agent layer 350. In this case, in the solute trapping column, a branched pathway is provided in each space between the trapping agent layers, and a ventilation pathway similar to the first ventilation pathway 600 and the second ventilation pathway 700 in the above-described embodiment is applied to each branched pathway. In addition, in each step of operation of the solute extracting apparatus 100, communication between each branched pathway and the atmosphere is controlled in the same manner as in the above-described embodiment, to individually recover the extraction solvent from the corresponding trapping agent layer.
(5) In the above-described embodiment, a plurality of trapping agent layers in the solute trapping column 300 are formed by using trapping agents made of different materials, however, these trapping agent layers may be formed of the same material.
   For example, for extracting dioxins from a solution of dioxins likewise the above-described embodiment, those having the ability to trap any dioxins (for example, activated carbon, graphite carbon, silica gel, alumina, Florisil, zeolite or a porous resin, or those carrying a transition metal or the like on these materials as a base, and so on) are used as a trapping agent. In this manner, the dioxins having passed through the first trapping agent layer without being trapped thereby can be sequentially trapped in the later trapping agent layers, so that it is possible to prevent dioxins from flowing out together with the developing solvent and to improve the recovery rate of the overall dioxins.
   In this case, dioxins trapped by each trapping agent layer are individually extracted with an extraction solvent, and the respective extraction solutions are combined together and subjected to analysis. Therefore, in quantitative analysis by the high resolution GC/MS method, the result of analysis with respect to each kind of dioxins can be unreliable due to the influence occurring between different kinds of dioxins. On the other hand, when GC-TOFMS is used as the GC/MS method, each of dioxins can be analyzed accurately even though an extract includes a variety of dioxins.
   Even when a plurality of trapping agent layers are formed of the same trapping agent, it is possible to develop dioxins by kind in the plurality of trapping agent layers by considering the number of trapping agent layers, the kind of the developing solvent, the supply speed and so on. In this case, dioxins can be fractionated and extracted. Such is the case with that part of the plurality of trapping agent layers are formed by using a different trapping agent.
(6) In the above-described embodiment, description was made taking the case of extracting dioxins from a solution of dioxins as an example. However, the solute extracting apparatus of the present invention can be used in the same manner in the case where a solute is extracted from a solution other than the solution of dioxins. The solution other than the solution of dioxins may contain a variety of solutes. In this case, depending on the condition or the like of the solution, a developing solvent may be directly supplied to the solute trapping column without using the purification column for removing impurities from the solution.

In this case, by appropriately selecting the kinds of the trapping agents forming the plurality of trapping agent layers to be packed in the solute trapping column, it is possible to fractionate and extract solutes, and to improve the recovery rate of the overall solutes.

### Experimental Examples

In the following experimental examples, a fish oil sample as described below was used as a solution of dioxins, and dioxins were extracted from this fish oil sample. The experimental examples are not intended to limit the present invention.

### Fish oil sample:

Fish oil (trade name "Fish oil, from menhaden" available from Sigma Aldrich) which was confirmed by the method described in Japanese Industrial Standards JIS K 0311 (2005) that it contains substantially no dioxins, and to which dioxins standard substance (trade name "DF-LCS-A", available from Wellington Laboratories) and PCBs standard substance (trade name "PCB-LCS-A1" available from Wellington Laboratories) are added was used. The fish oil contains a trace amount of PCDE as impurities. The dioxins standard substance contains PCDDs, PCDFs and DL-PCBs, all of them are labeled with ¹³C₁₂. The PCBs standard substance includes the following eight kinds of non-DL-PCBs (in parentheses are IUPAC numbers) having 1 to 8 chlorine atoms and labeled with ¹³C₁₂.
¹³C₁₂-4-MoCB (#3)
¹³C₁₂-4, 4'-DiCB (#15)
¹³C₁₂-2,4,4'-TrCB (#28)
"C₁₂-2,2',5,5'-TeCB (#52)
¹³C₁₂-2, 3',4,4',5-PeCB (#118)
¹³C₁₂-2,2',4,4',5,5'-HxCB (#153)
¹³C₁₂-2,2',3,4,4',5,5'- HpCB (#180)
¹³C₁₂-2 ,2',3,3',4,4',5,5'-OcCB (#194)

Among six kinds of PCBs isomers #28, #52, #101, #138, #153 and #180 (PCBs isomers having 3 to 7 chlorine atoms) which are targets of the food regulation in EU, the above eight kinds of non-DL-PCBs include four kinds of isomers #28, #52, #153 and #180 only, and do not include two kinds of isomers #101 (number of chlorine atoms: 5) and #138 (number of chlorine atoms: 6) . However, the above eight kinds of non-DL-PCBs substantially include all the six kinds of the EU food regulation target PCBs because the EU food regulation allows measuring different isomers having the corresponding number of chlorine atoms in place of the target isomers, and accordingly the above eight kinds of non-DL-PCBs include #118 and #153 respectively having the same number of chlorine atoms as #101 and #138.

In the following experimental examples, purifying agents packed in the purification column and trapping agents packed in the solute trapping column are as follows.

### <Purification column>

### Silver nitrate silica gel layer:

Silver nitrate silica gel prepared by adding the whole amount of an aqueous solution of 11.2 g of silver nitrate (available from Wako Pure Chemical Industries, Ltd.) dissolved in 30 mL of distilled water to 100 g of active silica gel (available from Kanto Chemical Co. , Inc.), uniformly mixing the aqueous solution and the active silica gel, and then drying the resultant active silica gel by heating to 70°C under reduced pressure by using a rotary evaporator was used.

### Sulfuric acid silica gel layer:

Sulfuric acid silica gel prepared by uniformly adding 78.7 g of concentrated sulfuric acid (available from Wako Pure Chemical Industries, Ltd.) to 100 g of active silica gel (available from Kanto Chemical Co., Inc.) and then drying the resultant active silica gel was used.

### <Solute trapping column>

### Activated carbon-containing silica gel layer:

Activated carbon-containing silica gel obtained by adding activated carbon (trade name "KURARAY COAL PK-DN" available from Kuraray Chemical Co., Ltd.) to active silica gel (available from Kanto Chemical Co., Inc.) and uniformly mixing the activated carbon and the active silica gel was used.

### Graphite-containing silica gel layer:

Graphite-containing silica gel obtained by adding graphite (trade name "ENVI-Carb" available from Sigma-Aldrich) to active silica gel (available from Kanto Chemical Co., Inc.) and uniformly mixing the graphite and the active silica gel was used.

### Alumina layer:

Trade name "Aluminium Oxide 90 active basic - (activity stage I) for column chromatography" (particle size: 0.063 to 0.200 mm) available from Merck was used.

### Experimental Examples 1 to 4

Using the solute trapping apparatus shown in Fig.1, dioxins were extracted from the fish oil sample, and the dioxins were analyzed. Specifications of the purification column and the solute trapping column used in the solute extracting apparatus are as follows.

### <Purification column>

In a tubular body having an outer diameter of 18.5 mm, an inner diameter of 12.5 mm, and a length of 200 mm, as shown in Fig. 1, 4.4 g (packing height: 60 mm) of silver nitrate silica gel was stacked on 8.5 g (packing height: 80 mm) of sulfuric acid silica gel to form the column (stacking of the first silica gel layer and the second silica gel layer was omitted).

### <Solute trapping column>

In a tubular body having an outer diameter of 8 mm, an inner diameter of 6 mm, and a length of 30 mm, as shown in Fig. 1, 0.25 g of graphite-containing silica gel (packing height: 25 mm) and 0.065 g of activated carbon-containing silica gel (packing height: 5 mm) were packed to form a first trapping agent layer, and 0.77 g (packing height: 30 mm) of alumina was packed to form a second trapping agent layer. The proportion of activated carbon contained in the activated carbon-containing silica gel, the proportion of graphite contained in the graphite-containing silica gel, and the stacking ratio (volume ratio) between the activated carbon-containing silica gel layer and the graphite-containing silica gel layer in the first trapping agent layer are shown in Table 1.

In the extracting operation of dioxins, about 4 mL of the fish oil sample solution was added to the silver nitrate silica gel layer of the purification column, and the purification layer in the purification column was heated to 60°C. Then, the purification column was gradually supplied with 85 mL of n-hexane from the side of the silver nitrate silica gel layer, and the supplied n-hexane was allowed to pass through the purification column and the solute trapping column. After n-hexane had passed through the solute trapping column, the first trapping agent layer and the second trapping agent layer were treated to be dried by allowing the air to pass therethrough. Then, after heating the first trapping agent layer and the second trapping agent layer to 90°C, 1.0 mL of toluene was supplied into the solute trapping column from the side of the second trapping agent layer, and toluene having passed through the second trapping agent layer was recovered through the second branched pathway to obtain a first extraction solution. Next, from the side of the second trapping agent layer, 1.5 mL of toluene was supplied into the solute trapping column, and toluene having passed through the second trapping agent layer and the first trapping agent layer in this order was recovered through the first branched pathway to obtain a second extraction solution. The time consumed to obtain the second extraction solution from addition of the fish oil sample was about 2 hours. The following Experimental Example 5 demonstrated the same result of time consumption in obtaining the second extraction solution.

The first extraction solution and the second extraction solution were individually subjected to quantitative analysis by the HRGC/HRMS method, and recovery rates of dioxins and non-DL-PCBs were calculated. The results are shown in Table 2.

### Experimental Example 5

Dioxins contained in the fish oil sample were extracted in the same manner as in Experimental Example 4 except that the stacking order of the silver nitrate silica gel layer and the sulfuric acid silica gel layer in the purification column was inversed, and the purification column was not heated but kept at room temperature (20°C), to obtain a first extraction solution and a second extraction solution. Then, the first extraction solution and the second extraction solution were individually subjected to quantitative analysis by the HRGC/HRMS method, and recovery rates of dioxins and non-DL-PCBs were calculated. The results are shown in Table 2.

### [Table 1]

**Table 1**

| Experimental Example | Proportion of activated carbon (*1) (% by weight) | Proportion of graphite (*2) (by weight) | Volume ratio (*3) |
|---|---|---|---|
| 1 | 0.13 | 5 | 1:5 |
| 2 | 0.13 | 12.5 | 1:5 |
| 3 | 0.13 | 25 | 1:5 |
| 4 | 0.13 | 50 | 1:5 |
| 5 | 0.13 | 50 | 1:5 |

| | | | |
|---|---|---|---|
| *1: Proportion of activated carbon contained in activated carbon-containing silica gel *2: Proportion of graphite contained in graphite-containing silica gel *3: Volume ratio (A : B) between activated carbon-containing silica gel layer (A) and graphite-containing silica gel layer (B) | | | |

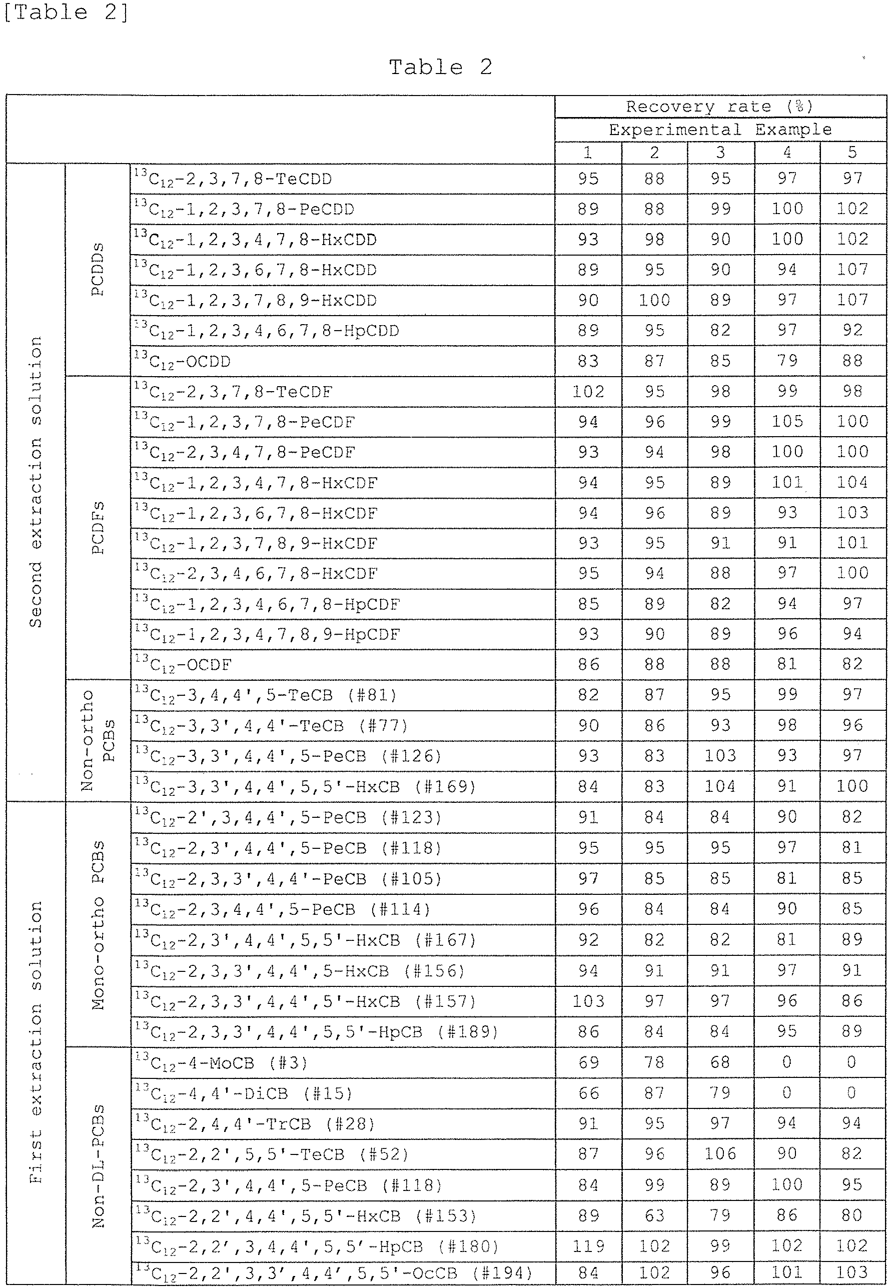

According to Table 2, the second extraction solution contains PCDDs, PCDFs and non-ortho PCBs at high recovery rates . On the other hand, the first extraction solution contains mono-ortho PCBs at high recovery rates . These results show that in Experimental Examples 1 to 5, the dioxin group including non-ortho PCBs, PCDDs and PCDFs was highly separated from mono-ortho PCBs.

Table 2 also demonstrates that the first extraction solution obtained in Experimental Examples 1 to 5 contains non-DL-PCBs which are targets of food regulation in EU at recovery rates within an adequate range by the regulation (60 to 120%), and non-DL-PCBs which are targets of food regulation in EU can be quantitatively analyzed together with mono-ortho PCBs.

In addition, since no substantial interference peak by PCDE was observed in the quantification by the HRGC/HRMS method, it is considered that PCDE was effectively separated from the second extraction solution.

The present invention can be carried out in other specific forms without departing from the spirit or essential properties thereof. The above embodiments and examples are therefore to be considered in all respects as illustrative and not restrictive. The scope of the present invention is indicated by the appended claims rather than by the foregoing description.

## Claims

1. An apparatus (100) for extracting a solute from a solution, comprising:
a solute trapping column (300) having at one end an injection part equipped with an injection port for the solution, the column having a discharge port at the other end and including multiple trapping agent layers (340, 350) capable of trapping the solute, the layers packed in the column with a space interposed therebetween;
a first supplying pathway (500) for supplying the solute trapping column (300) at said one end with a solvent for developing the solute within the solute trapping column;
a second supplying pathway (550) for supplying the solute trapping column (300) at said other end with a solvent for extracting the solute;
a supplying device (400) for switching a supply of the developing solvent to the first supplying pathway (500) and a supply of the extraction solvent to the second supplying pathway (550),
wherein solute trapping column (300) has branched pathways (320, 330) respectively extending from said injection part and said space for the flow of the extraction solvent from the second supplying pathway (550) ; and
a controlling device for controlling the extraction solvent supplied to the solute trapping column (300) so that the extraction solvent flows in one of the branched pathways (320, 330) sequentially selected from the extraction solvent supply side while the flow of the extraction solvent in the other of the branched pathways and the injection port is blocked, and also for controlling the developing solvent supplied to the solute trapping column (300) so that the flow of the developing solvent to the branched pathways (320, 330) is blocked.

2. The solute extracting apparatus according to claim 1, wherein at least one of the multiple trapping agent layers is formed of a different trapping agent.

3. The solute extracting apparatus according to claim 1, wherein the multiple trapping agent layers are formed of a single trapping agent.

4. The solute extracting apparatus according to any one of claims 1 to 3, further comprising closable ventilation pathways (600, 700) respectively communicating with each of the branched pathways (320, 330) and having a recovery container (630, 730) for the extraction solvent,
wherein a flow of the extraction solvent or the developing solvent for each of the branched pathways is controlled by opening or closing of the ventilation pathways.

5. The solute extracting apparatus according to claim 4, wherein each of the ventilation pathways is formed of a flexible material and has a pinch valve (620), (720) in the way between the corresponding branched pathway and the recovery container.

6. The solute extracting apparatus according to any one of claims 1 to 5, wherein the second supplying pathway (550) is capable of supplying the solute trapping column (300) with the extraction solvent through the discharge port.

7. The solute extracting apparatus according to any one of claims 1 to 6, further comprising an air supplying pathway (800) for supplying the solute trapping column with an air flow through the branched pathways.

8. The solute extracting apparatus according to any one of claims 1 to 7, wherein the solution is an aliphatic hydrocarbon solvent solution of dioxins, and
the multiple trapping agent layers are capable of trapping the dioxins.

9. The solute extracting apparatus according to claim 8, wherein the solute trapping column (300) includes a first trapping agent layer (340) containing activated carbon-containing silica gel (341) and graphite-containing silica gel (342) stacked in this order from the side of the injection part, and a second trapping agent layer (350) containing alumina disposed on the side of the graphite-containing silica gel of the first trapping agent layer.

10. The solute extracting apparatus according to claim 8 or 9, further comprising a purification column (200) packed with a purification layer (230) for trapping impurities contained in the aliphatic hydrocarbon solvent solution, which has an introducing part (211) for the aliphatic hydrocarbon solvent solution at one end and communicates with the injection port of the solute trapping column (300) at the other end, wherein, the first supplying pathway (500) communicates with the introducing part (211) so that it supplies the solute trapping column (300) with the developing solvent through the purification column (200).

11. The solute extracting apparatus according to claim 10, wherein the purification layer is a layered product including a silver nitrate silica gel layer and a sulfuric acid silica gel layer.

12. The solute extracting apparatus according to claim 11, wherein the layered product has the silver nitrate silica gel layer on the side of the introducing part (211).

## Patentansprüche

1. Vorrichtung (100) zur Extraktion gelöster Stoffe aus einer Lösung, umfassend:
eine Abfangsäule für gelöste Stoffe (300), die an einem Ende einen Injektionsteil aufweist, der mit einem Injektionsport für die Lösung ausgestattet ist, wobei die Säule einen Auslassport am anderen Ende aufweist
und mehrere Abfangmittelschichten (340, 350) umfasst, die in der Lage sind, die gelösten Stoffe abzufangen, wobei die Schicht mit einem Zwischenraum dazwischen abgefüllt sind;
einen ersten Zufuhrweg (500) zum Zuführen eines Lösungmittels zum Entwickeln der gelösten Stoffe in der Abfangsäule für gelöste Stoffe an das eine Ende der Abfangsäule für gelöste Stoffe (300);
einen zweiten Zufuhrweg (550) zum Zuführen eines Lösungsmittels zur Extraktion der gelösten Stoffe an das andere Ende der Abfangsäule für gelöste Stoffe (300);
eine Zufuhrvorrichtung (400) zum Umschalten einer Zufuhr des Entwicklungslösungsmittels zum ersten Zufuhrweg (500) und einer Zufuhr des Extraktionslösungsmittels zum zweiten Zufuhrweg (550), wobei die Abfangsäule für gelöste Stoffe (300) verzweigte Wege (320, 330) aufweist, die sich jeweils vom Injektionsteil und dem Raum für den Durchstrom des Extraktionslösungsmittels vom zweiten Zufuhrweg (550) erstrecken; und
eine Steuervorrichtung zum Steuern des zur Abfangsäule für gelöste Stoffe (300) zugeführten Extraktionslösungsmittels, so dass das Extraktionslösungsmittel in einen der verzweigten Wege (320, 330) strömt, die von der Extraktionslösungszufuhrseite aufeinanderfolgend ausgewählt werden, während der Strom des Extraktionslösungsmittels in den anderen der verzweigten Wege und den Injektionsport gesperrt ist, und auch zum Steuern des zur Abfangsäule für gelöste Stoffe (300) zugeführten Entwicklungslösungsmittels, so dass der Strom des Entwicklungslösungsmittels zu den verzweigten Wegen (320, 330) gesperrt ist.

2. Vorrichtung zur Extraktion gelöster Stoffe nach Anspruch 1, wobei mindestens eine der mehreren Abfangmittelschichten aus einem unterschiedlichen Abfangmittel geformt ist.

3. Vorrichtung zur Extraktion gelöster Stoffe nach Anspruch 1, wobei die mehreren Abfangmittelschichten aus einem einzigen Abfangmittel geformt sind.

4. Vorrichtung zur Extraktion gelöster Stoffe nach einem der Ansprüche 1 bis 3, ferner umfassend verschließbare Belüftungswege (600, 700), die jeweils mit jedem der verzweigten Wege (320, 330) verbunden sind und einen Rückgewinnungsbehälter (630, 730) für das Extraktionslösungsmittel aufweist,
wobei ein Strom des Extraktionslösungsmittels oder des Entwicklungslösungsmittels für jeden der verzweigten Wege durch Öffnen oder Schließen der Belüftungswege gesteuert wird.

5. Vorrichtung zur Extraktion gelöster Stoffe nach Anspruch 4, wobei jeder der Belüftungswege aus einem flexiblen Material geformt ist und ein Quetschventil (620), (720) im Weg zwischen dem entsprechenden Weg und dem Rückgewinnungsbehälter aufweist.

6. Vorrichtung zur Extraktion gelöster Stoffe nach einem der Ansprüche 1 bis 5, wobei der zweite Zufuhrweg (550) in der Lage ist, das Extraktionslösungsmittel durch den Auslassport zur Abfangsäule für gelöste Stoffe (300) zuzuführen.

7. Vorrichtung zur Extraktion gelöster Stoffe nach einem der Ansprüche 1 bis 6, ferner umfassend einen Luftzufuhrweg (800) zum Zuführen eines Luftsstroms durch die verzweigten Wege zur Abfangsäule für gelöste Stoffe.

8. Vorrichtung zur Extraktion gelöster Stoffe nach einem der Ansprüche 1 bis 7, wobei die Lösung eine aliphatische Kohlenwasserstofflösungsmittellösung aus Dioxinen ist und die mehreren Abfangmittelschichten in der Lage sind, die Dioxine abzufangen.

9. Vorrichtung zur Extraktion gelöster Stoffe nach Anspruch 8, wobei die Abfangsäule für gelöste Stoffe (300) eine erste Abfangmittelschicht (340), die aktivkohlehaltiges Kieselgel (341) und graphithaltiges Kieselgel (342) enthält, die von der Seite des Injektionsteils in dieser Reihenfolge gestapelt sind, und eine zweite Abfangmittelschicht (350), die auf der Seite des graphithaltigen Kieselgeles der ersten Abfangmittelschicht angeordnetes Aluminiumoxid enthält, beinhaltet.

10. Vorrichtung zur Extraktion gelöster Stoffe nach Anspruch 8 oder 9, ferner umfassend eine Reinigungssäule (200), die mit einer Reinigungsschicht (230) zum Abfangen von in der aliphatischen Kohlenstofflösungsmittellösung enthaltenen Verunreinigungen abgefüllt ist, welche einen Einführungsteil (211) für die aliphatische Kohlenwasserstofflösungsmittellösung an einem Ende aufweist und mit dem Injektionsport der Abfangsäule für gelöste Stoffe (300) am anderen Ende verbunden ist,
wobei der erste Zufuhrweg (500) mit dem Einführungsteil (211) verbunden ist, so dass er das Entwicklungslösungsmittel durch die Reinigungssäule (200) zur Abfangsäule für gelöste Stoffe (300) zuführt.

11. Vorrichtung zur Extraktion gelöster Stoffe nach Anspruch 10, wobei die Reinigungsschicht ein geschichtetes Produkt ist, das eine Silbernitratkieselgelschicht und eine Schwefelsäurekieselgelschicht enthält.

12. Vorrichtung zur Extraktion gelöster Stoffe nach Anspruch 11, wobei das geschichtete Produkt die Silbernitratkieselgelschicht auf der Seite des Einführungsteils (211) aufweist.

## Revendications

1. Appareil (100) destiné à extraire un soluté d'une solution, comprenant :
une colonne de capture de soluté (300) possédant au niveau d'une extrémité une partie d'injection dotée d'un orifice d'injection pour la solution, la colonne possédant un orifice de décharge au niveau de l'autre extrémité
et comprenant de multiples couches d'agent de capture (340, 350) capables de capturer le soluté, les couches étant conditionnées dans la colonne avec un espace interposé entre elles ;
un premier trajet d'alimentation (500) permettant d'alimenter la colonne de capture de soluté (300) au niveau de ladite extrémité avec un solvant pour développer le soluté à l'intérieur de la colonne de capture de soluté ;
un second trajet d'alimentation (550) permettant d'alimenter la colonne de capture de soluté (300) au niveau de ladite autre extrémité en solvant pour extraire le soluté ;
un dispositif d'alimentation (400) destiné à commuter une alimentation en solvant de développement vers le premier trajet d'alimentation (500) et une alimentation en solvant d'extraction vers le second trajet d'alimentation (550), ladite colonne de capture de soluté (300) possédant des trajets ramifiés (320, 330) s'étendant respectivement à partir de ladite partie d'injection et dudit espace pour l'écoulement du solvant d'extraction à partir du second trajet d'alimentation (550) ; et
un dispositif de commande destiné à commander le solvant d'extraction fourni à la colonne de capture de soluté (300) afin que le solvant d'extraction s'écoule dans l'un des trajets ramifiés (320, 330) sélectionnés séquentiellement du côté de l'alimentation en solvant d'extraction tandis que l'écoulement du solvant d'extraction dans l'autre des trajets ramifiés et l'orifice d'injection est bloqué, ainsi que pour commander le solvant de développement fourni à la colonne de capture de soluté (300) afin que l'écoulement du solvant de développement vers les trajets ramifiés (320, 330) soit bloqué.

2. Appareil d'extraction de soluté selon la revendication 1, au moins l'une des multiples couches d'agent de capture étant constituée d'un agent de capture différent.

3. Appareil d'extraction de soluté selon la revendication 1, lesdites multiples couches d'agent de capture étant constituées d'un seul agent de capture.

4. Appareil d'extraction de soluté selon l'une quelconque des revendications 1 à 3, comprenant en outre des trajets de ventilation pouvant être fermés (600, 700) communiquant respectivement avec chacun des trajets ramifiés (320, 330) et possédant un récipient de récupération (630, 730) pour le solvant d'extraction,
un écoulement du solvant d'extraction ou du solvant de développement pour chacun des trajets ramifiés étant commandé par l'ouverture ou la fermeture des trajets de ventilation.

5. Appareil d'extraction de soluté selon la revendication 4, chacun des trajets de ventilation étant formé d'un matériau souple et possédant une soupape à pincement (620), (720) dans le chemin entre le trajet ramifié correspondant et le récipient de récupération.

6. Appareil d'extraction de soluté selon l'une quelconque des revendications 1 à 5, ledit second trajet d'alimentation (550) étant capable d'alimenter la colonne de capture de soluté (300) en solvant d'extraction à travers l'orifice de décharge.

7. Appareil d'extraction de soluté selon l'une quelconque des revendications 1 à 6, comprenant en outre un trajet d'alimentation en air (800) pour alimenter la colonne de capture de soluté en flux d'air à travers les trajets ramifiés.

8. Appareil d'extraction de soluté selon l'une quelconque des revendications 1 à 7, ladite solution étant une solution de solvant hydrocarboné aliphatique de dioxines, et
lesdites multiples couches d'agent de capture étant capables de capturer les dioxines.

9. Appareil d'extraction de soluté selon la revendication 8, ladite colonne de capture de soluté (300) comprenant une première couche d'agent de capture (340) contenant du gel de silice contenant du charbon activé (341) et du gel de silice contenant du graphite (342) empilés dans cet ordre à partir du côté de la partie d'injection, et une seconde couche d'agent de capture (350) contenant de l'alumine disposée sur le côté du gel de silice contenant du graphite de la première couche d'agent de capture.

10. Appareil d'extraction de soluté selon la revendication 8 ou 9, comprenant en outre une colonne de purification (200) remplie d'une couche de purification (230) pour capturer des impuretés contenues dans la solution de solvant hydrocarboné aliphatique, qui possède une partie d'introduction (211) pour la solution de solvant hydrocarboné aliphatique au niveau d'une extrémité et communique avec l'orifice d'injection de la colonne de capture de soluté (300) au niveau de l'autre extrémité,
ledit premier trajet d'alimentation (500) communiquant avec la partie d'introduction (211) afin qu'il alimente la colonne de capture de soluté (300) en solvant de développement à travers la colonne de purification (200).

11. Appareil d'extraction de soluté selon la revendication 10, ladite couche de purification étant un produit stratifié comprenant une couche de gel de silice de nitrate d'argent et une couche de gel de silice d'acide sulfurique.

12. Appareil d'extraction de soluté selon la revendication 11, ledit produit stratifié possédant la couche de gel de silice de nitrate d'argent sur le côté de la partie d'introduction (211).
